# EUROPEAN PATENT SPECIFICATION

(11) **EP 1 033 601 B1**
(45) Date of publication and mention of the grant of the patent: **03.08.2005**
(21) Application number: 00104411.4
(22) Date of filing: 02.03.2000
(51) Int. Cl.: G02B 26/02

(54) **Optical switch and method of making the same**
Optischer Schalter und Verfahren zur Herstellung eines solchen Schalters
Commutateur optique et son procédé de fabrication

(30) Priority: 04.03.1999 JP 5742799; 05.03.1999 JP 5829799
(43) Date of publication of application: 06.09.2000
(73) Proprietor: JAPAN AVIATION ELECTRONICS INDUSTRY LIMITED, Shibuya-ku, Tokyo 150-0043 (JP)
(72) Inventor: Kato, Yoshichika, Japan Aviat. Electr. Ind. Ltd., Tokyo 150-0043 (JP)
(74) Representative: Hoffmann, Eckart, Dipl.-Ing.

(56) References cited:
- EP-A- 0 219 358
- DE-C- 3 817 035
- US-A- 5 594 820
- BOYSEL R M ET AL: "INTEGRATION OF DEFORMANLE MIRROR DEVICES WITH OPTICAL FIBERS AND WAVEGUIDES" PROCEEDINGS OF THE CONFERENCE ON INTEGRATED OPTICS AND MICROSTRUCTURES,US,BELLINGHAM, SPIE, vol. CONF. 1, 1992, pages 34-39, XP000700798 ISBN: 0-8194-0972-3

## Description

### BACKGROUND OF THE INVENTION

The present invention relates to an optical switch for use in optical communication systems or the like and a method of making the same.

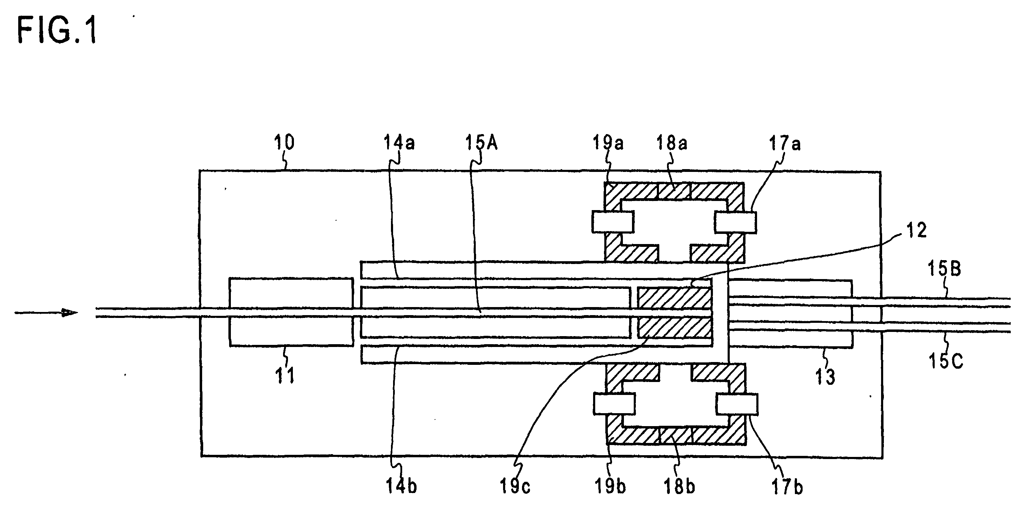

With recent developments of optical networks, optical switches are now receiving attention as optical devices of the utmost importance. Also there is a demand for their miniaturization in accordance with the present trend toward increasingly high-capacity optical networks. To meet the demand, a miniaturized optical switch has been proposed which has a movable switching portion formed using micromachine technology. Its structure is depicted in Fig. 1. Reference numeral 10 denotes a silicon (Si) substrate having a groove cut therein by micromachining, wherein there are formed a pair of parallel cantilevers 14a and 14b coupled together at their free ends. Fixedly disposed on the substrate 10 near opposite ends of the cantilevers 14a and 14b lengthwise thereof are guide blocks 11 and 13. Disposed adjacent the guide block 13 is another guide block 12 formed integrally with the cantilever free end coupling portion. The guide block 12 is coated over the entire area of its surface or underside with a soft magnetic film 19c. These guide blocks 11, 12 and 13 have the same height.

An optical fiber 15A is fixed its one end on the guide block 12 and extended and supported across the top of the guide block 11. Two optical fibers 15B and 15C are fixed at one end in parallel to the guide block 13. On the substrate 10 there are mounted magnetic yokes 19a and 19b at both sides of the guide block 12, the magnetic yokes 19a and 19b having wound thereon coils 17a and 17b, respectively. The magnetic yokes 19a and 19b are split centrally thereof and have permanent magnets 18a and 18b inserted between the gaps, respectively.

With the optical switch of such a construction as described above, the application of a driving voltage to, for example, the coil 17a causes it to attract the soft magnetic film 19c coated on the guide block 12 to resiliently bend the cantilevers 14a and 14b toward the magnetic yoke 19a, bringing the light-emitting end of the optical fiber 15A to the position where it stands opposite the light-receiving end of the optical fiber 15B. On the contrary, the voltage application to the coil 17b of the yoke 19b causes the light-emitting end of the optical fiber 15A to stand opposite the light-receiving end of the optical fiber 15C. In this way, light emitted from the optical fiber 15A can selectively be launched into the optical fibers 15B and 15C.

The manufacture of such a conventional optical switch encounters a difficulty in the miniaturization of the magnetic yokes 19a and 19b with the coils 17a and 17b wound thereon; for example, the substrate 10 inevitably becomes as large as 20 by 17 mm or so. It has also been proposed to miniaturize the optical switch by forming optical waveguides in the cantilevers 14a and 14b in Fig. 1, but the proposed optical switch structure still electromagnetically drives the cantilevers and measures about 16 by 18 mm. Besides, the proposed optical switch has a defect that the insertion loss of the waveguide is as large as several dB.

EP-A-0 219 358 discloses an optical switch comprising: a substrate; a fixed electrode means mounted on the substrate; a movable electrode means disposed opposite to said fixed electrode means in spaced relation thereto; elastic support means for coupling said movable electrode means and said substrate means and for elastically supporting said movable electrode means so that said movable electrode means can be pivoted around a vertical axis; wherein said movable electrode means has a tight receiving surface and, by ON-OFF control of voltage application across said movable electrode means and said fixed electrode means, said movable electrode means is displaced toward said fixed electrode means and returned to its normal position to selectively switch the optical path of an incident light beam.

DE-C-38 17 035 discloses a micromechanical switch for optical fibers having a substrate and a seesaw like switching element etched out of but still connected to the substrate so as to be pivotally supported by the substrate. The switching element carries a piece of optical fiber. The piece of optical fiber is positioned between two other optical fibers such that, in one pivotal position of the switching element, the piece of optical fiber optically connects the two other optical fibers, i.e., closes the optical path, whereas, in the other pivotal position, the optical path between the other two optical fibers is disconnected. Various ways for driving the switching element are suggests in the document but no details are provided.

### SUMMARY OF THE INVENTION

It is an object of the present invention to provide an optical switch that can be driven at a low voltage and hence can be miniaturized, and a method of making such an optical switch.

This object is achieved by an optical switch as claimed in claims 1 and 21, respectively, and a method of manufacturing it as claimed in claim 32. Preferred embodiments of the invention are subject-matter of the dependent claims.

### BRIEF DESCRIPTION OF THE DRAWINGS

Fig. 1 is a plan view depicting an example of a conventional optical switch;
Fig. 2A is a plan view illustrating an improvement of the prior art example;
Fig. 2B is a sectional view taken along the line 2B-2B in Fig. 2A;
Figs. 3A through 3I are sectional views showing a sequence of steps involved in the manufacture of the optical switch depicted in Figs. 2A and 2B;
Fig. 4A is a plan view illustrating an optical switch according to a first embodiment of the present invention;
Fig. 4B is a sectional view taken along the line 4B-4B in Fig. 4A;
Figs. 5A through 5I are sectional views showing a sequence of steps involved in the manufacture of the optical switch according to the first embodiment;
Fig. 6 is a plan view of a matrix switch array using optical switches of Figs. 2A and 2B;
Fig. 7 is a plan view of a matrix switch array using optical switches according to the first embodiment;
Figs. 8A through 8H are sectional views depicting a sequence of steps involved in the manufacture of a modified form of the optical switch according to the first embodiment;
Fig. 9A is a plan view illustrating an optical switch according to a second embodiment of the present invention;
Fig. 9B is a sectional view taken along the line 9B-9B in Fig. 9A;
Fig. 10 is a plan view depicting a movable electrode-elastic support pattern;
Fig. 11 is a plan view depicting another movable electrode-elastic support pattern;
Fig. 12 is a plan view depicting another movable electrode-elastic support pattern;
Fig. 13 is a plan view depicting another movable electrode-elastic support pattern;
Fig. 14 is a plan view depicting another movable electrode-elastic support pattern;
Fig. 15 is a plan view depicting another movable electrode-elastic support pattern;
Fig. 16 is a plan view depicting another movable electrode-elastic support pattern;
Fig. 17 is a plan view depicting still another movable electrode-elastic support pattern;
Fig. 18 is a plan view showing an optical switch module using the optical switch of the present invention;
Fig. 19 is a graph showing minimum driving voltages measured with respect to the switch size, using the thickness of the elastic support in the Fig. 18 structure as a parameter; and
Fig. 20 is a graph showing the relationship between the minimum driving voltage and power consumption measured for various switch sizes.

### DETAILED DESCRIPTION OF THE PREFERRED EMBODIMENTS

One possible solution to the above-described problems of the prior art example is an optical switch structure wherein: a movable electrode is elastically held in an opening of a frame-like substrate; a mirror is fixedly mounted on the movable electrode at right angles to the electrode surface; a fixed electrode is mounted on the substrate in opposed but spaced relation to the underside of the movable electrode; a driving voltage is applied across the movable and the fixed electrode to attract the former toward the latter by electrostatic force; and the optical path from the light-emitting end of a first optical fiber to the light-receiving end of a second optical fiber is switched ON and OFF by the mirror mounted on the movable electrode. Figs, 2A and 2B are plan and sectional views of an optical switch employing such a structure. In an opening 21a of, for example, a rectangular-frame-shaped silicon (Si) substrate 21A, a movable electrode 24 of a rectangular shape in this example is placed in parallel to the substrate 21A with two opposite sides of the electrode 24 coupled to stationary portions 22a and 22b on the frame-shaped substrate 21A through elastic supports portions 23a and 23b, respectively. Supported by the flexible elastic support portions 23a and 23b, the movable electrode 24 is allowed to move vertically with respect to the substrate surface. On the movable electrode 24 there is mounted a micro mirror 25 with its reflecting surface held at right angles to the movable electrode surface.

On the other hand, the opening 21a of the substrate 21A is stopped up from the underside thereof with a conductive substrate 21B that is disposed as a fixed electrode in opposed but spaced relation to the surface region of the substrate 21A which contains the movable electrode 24 and the support portions 23a and 23b.

In this embodiment the conductive substrate 21B is machined to conform to the opening 21a and bonded to the substrate 21A from the underside thereof. The top of the conductive substrate 21B fitted in the opening 21a, that is, the fixed electrode surface is held at a predetermined level below the underside of the substrate 21A--this provides the maximum amount of displacement for the movable electrode 24 that allows the micro mirror 25 to move up and down to inhibit and permit the passage of a light beam.

In the optical switch 20 of such a construction the stationary portions 22a, 22b, the elastic support portions 23a, 23b and the movable electrode 24 are integrally formed of the same conductive material such as polysilicon. By applying a voltage across the movable electrode 24 and the conductive substrate 21B, the former is displaced toward the latter by electrostatic force so that the micro mirror 25 standing upright on the movable electrode 24 moves vertically with respect to the substrate surface to thereby switch the optical path of a light beam incoming from the direction parallel to the substrate surface.

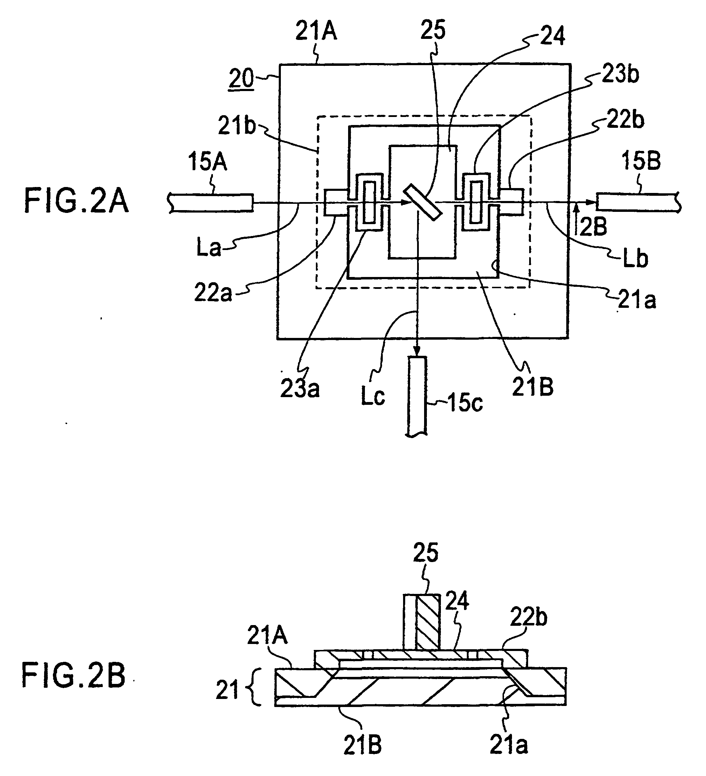

In Fig. 2A, reference numerals 15A, 15B and 15C denote optical fibers disposed, for instance, around the optical switch 20, La light incident on the optical switch 20, and Lb and Lc light emitted or emerged from the optical switch 20. When inserted in the optical path, the micro mirror 25 reflects the incident light La and launches the reflected light Lc into the optical fiber 15C. When the micro mirror 25 is displaced toward the fixed electrode side stays out of the optical path, the incoming light La is launched intact as the outgoing light Lc into the optical fiber 15b.

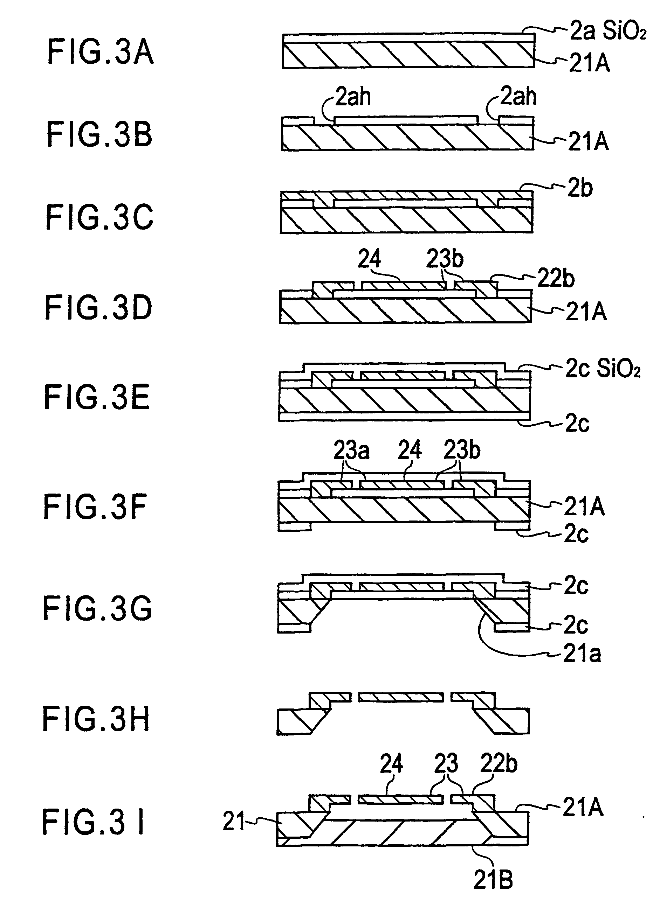

Fig. 3 illustrates, in section, a sequence of steps involved in the manufacture of the optical switch 20 depicted in Figs. 2A and 2B. A description will be given below of each step of fabrication.
Step S1 (Fig. 3A): A silicon substrate of a square configuration, in this example, is prepared as the substrate 21A, which is then coated all over its surface with an SiO₂ protective film 2a about 1 µm thick.
Step S2 (Fig. 3B): The protective film 2a is selectively etched away to make holes 2ah measuring, for example, approximately 100 by 100 µm, where the stationary portions 22a and 22b will ultimately be formed.
Step S3 (Fig. 3C): A conductive polysilicon film 2b is formed to a thickness of about 3 µm over the entire surface area of the SiO₂ film 2a including the holes 2ah for the purpose of forming the stationary portions 22a, 22b, the elastic support portions 223a, 23b and the movable electrode 24 as a unitary structure with one another. The conductive polysilicon film 2b is a P-type one with boron (B) thermally diffused thereinto.
Step S4 (Fig. 3D): The polysilicon film 2b is selectively etched away to form the movable electrode 24, the elastic support portions 23a, 23b and the stationary portions 22a, 22b.
Step S5 (Fig. 3E): An SiO₂ protective film 2c is formed all over the top and underside of the substrate assembly.
Step S6 (Fig. 3F): The protective film 2c is selectively etched away that region of the underside of the substrate 21A (a broken-line area 21b in Fig. 2A) which corresponds to the movable electrode 24 and the elastic support portions 23a and 23b.
Step S7 (Fig. 3G): The substrate 21A is subjected to anisotropic etching using a KOH solution to form the opening 21a.
Step S8 (Fig. 3H): The remaining protective films 2a and 2c are removed.
Step S9 (Fig. 3I): The conductive substrate 21B machined as required to form the fixed electrode is fitted into the opening 21a and bonded to the substrate 21A from the underside thereof. The conductive substrate 21B in this example is an N-type conductive silicon substrate.

Finally, though not shown, the micro mirror 25 is placed on the movable electrode 24.

As described above, the optical switch depicted in Figs. 2A and 2B utilizes electrostatic drive in place of electromagnetic one, and hence it need not be provided with the magnetic yokes 19a, 19b, the coils 17a, 17b and the permanent magnets 18a, 18b shown in Fig. 1; therefore, the optical switch of the present invention can be made smaller accordingly.

With the structure in which the opening 21a is formed by selectively etching away the substrate 21A from the underside thereof and the conductive substrate is bonded to the opening 21a from the underside of the substrate 21A as described above, the substrate 21A has a frame-like configuration and hence needs to have a frame width large enough to provide sufficient mechanical strength of the substrate itself and sufficient area for bonding thereto the substrate 21B. To meet the requirements, it is necessary that outer dimensions of the optical switch 20 be designed a little large relative to the device area surrounded by the broken line 21b in Fig. 2A. In the case of using a silicon (Si) substrate as the substrate 21A and forming therein the opening 21a by anisotropic etching, the area of the opening 21a in the underside of the substrate 21A needs to be made particularly large since the inner face of the opening 21a is tapered as depicted in Fig. 2B. This makes the substrate 21A larger and constitutes an obstacle to the downsizing of the optical switch.

Moreover, the bonding of the conductive substrate 21B inevitably decreases the accuracy of fabrication, and it cannot be said that positioning accuracy of the top of the conductive substrate 21B, that is, positioning accuracy of the fixed electrode surface is high.

Besides, the fabrication of the above optical switch involves the bonding step in addition to the series of film forming and etching steps, and hence it is complex in process and time- and labor-consuming. A description will be given below of embodiments of the optical switch of the present invention intended to overcome such disadvantages.

### FIRST EMBODIMENT

In this embodiment of the invention, a movable electrode is mounted on a conductive substrate in parallel to the substrate surface and is made displaceable at right angles to the substrate surface, and a micro mirror is mounted on the movable electrode. A low-floor portion is formed in the substrate surface by etching, and the bottom of the low-floor area is used as the fixed electrode surface that is opposite and parallel to the movable electrode.

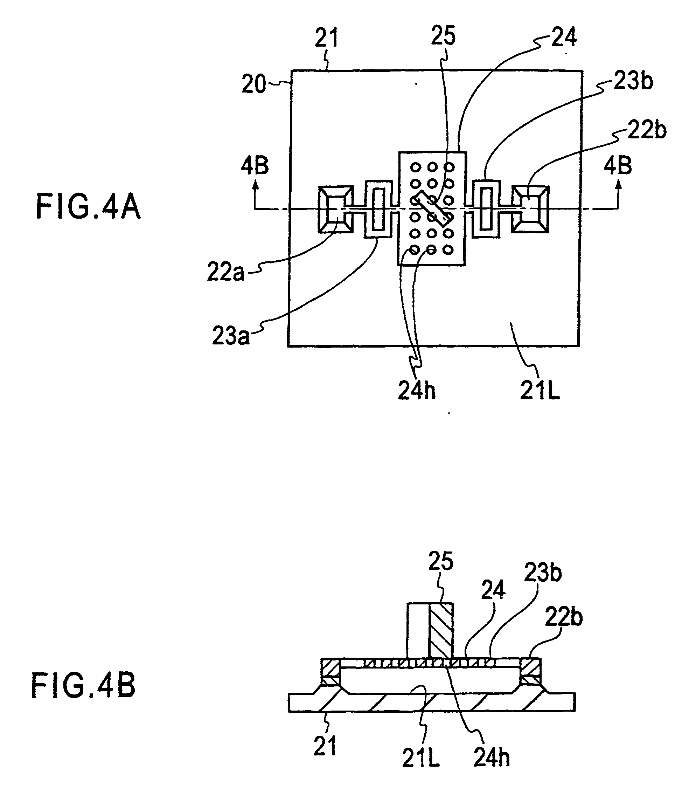

Figs. 4A and 4B depict the optical switch according to the first embodiment, wherein the parts corresponding to those in Figs. 2A and 2B are identified by the same reference numerals. In this embodiment the substrate 21 is formed of a conductive material and has a low-floor portion 21L formed in its surface by etching, and the floor surface of the low-floor portion 21L constitutes the fixed electrode surface adjacent but parallel to the movable electrode 24; namely, the substrate 21 serves a fixed electrode. The movable electrode 24 is supported on the substrate 21 by the elastic support portions 23a and 23b formed integrally with the electrode 24 as in the first embodiment shown in Figs. 2A and 2B. Mounted on the movable electrode 24 is the micro mirror 25.

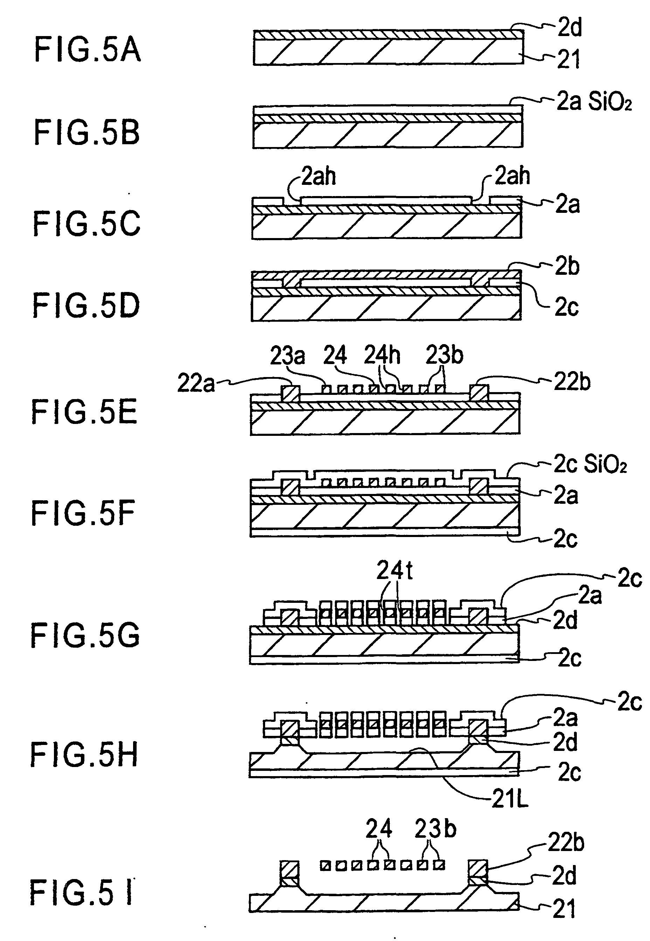

Referring next to Figs. 5A through 5I, a description will be given of a method for making the optical switch depicted in Figs. 4A and 4B.
Step S1 (Fig. 5A): For example, an N-type conductive silicon substrate 21 of a square configuration is coated all over its top surface with a P-type conductive polysilicon film 2d with boron (B) thermally diffused thereinto.
Step S2 (Fig. 5B): An SiO₂ protective film 2a is formed all over the surface of the polysilicon film 2d.
Ste S3 (Fig. 5C): The protective film 2a is selectively removed to make therein holes 2ah at those positions where to form the stationary portions 22a and 22b.
Step S4 (Fig. 5D): A P-type conductive polysilicon film 2b is formed all over the surface of the protective film 2a including the exposed areas 2ah.
Step S5 (Fig. 5E): The P-type conductive polysilicon film 2b is selectively etched away to form the movable electrode 24, the elastic support portions 23a, 23b and the stationary portions 22a, 22b. At this time, a plurality of through holes 24h are bored in matrix form through the movable electrode 24 as depicted in Fig. 4A.
Step S6 (Fig. 5F): An SiO₂ protective film 2c is formed over the entire areas of the top and underside of the substrate assembly.
Step S7 (Fig. 5G): The SiO₂ films 2a and 2c on the upper side (on the side near the movable electrode 24) of the substrate assembly are patterned to form through holes 24t which extend down to the polysilicon film 2d in alignment with the through holes 24h of the movable electrode 24. At the same time, the SiO2 films 2a and 2c are patterned so that their outside shape becomes slightly larger than the outside shape of the movable electrode 24 and the elastic support portions 23a, 23b but larger than the outside shape of the stationary portions 22a and 22b as required.
Step S8 (Fig. 5H): The substrate 21 is etched using a KOH solution. The KOH solution flows to the polysilicon film 2d through the through holes 24t, by which the polysilicon film 2d of an isotropic etching property is etched away to expose the silicon substrate 21, which also undergo anisotropic etching to form the low-floor portion 21L. Incidentally, the polysilicon film 2d underlying he stationary portions 22a and 22b is covered with the protective films 2a and 2c which are sufficiently thicker than the film 2d as referred to above, and hence the polysilicon film 2d remains unetched (that is, the thickness of the polysilicon film 2d and the mask pattern diameters of the protective films 2a and 2c overlying the stationary portions 22a and 22b are determined accordingly).
Step S9 (Fig. 5I): The protective films 2a and 2c are removed.

This is followed, though not shown, by placing the micro mirror 25 on the movable electrode 24 to complete the optical switch 20. The micro mirror 25 is formed by: depositing a metal land as a plating seed at the position where to form the micro mirror 25 on the movable electrode 24, for example, in Fig. 3I; coating a resist film all over the substrate surface to a thickness a little higher than the height of the micro mirror 25 to be formed; selectively etching away the resist film to make a hole that has a shape corresponding to the micro mirror 25 to be formed and extends down to the metal land; filling the hole with gold (Au), nickel (Ni), or similar metal by plating; and removing the resist film to form the micro mirror 25 on the movable electrode 24. For example, in the optical witch module described later on, a gold block of a size measuring 45 by 200 by 40 µm is formed as the micro mirror. Alternatively, the micro mirror may be obtained by forming a mirror support panel of a resist on the movable electrode 24 at the position where to form the micro mirror and then vapor evaporating gold, nickel, or like metal onto the support panel.

In step S1 described above, the boron (B) thermally diffused into the polysilicon film 2d diffuses down to the surface region of the N-type silicon substrate 21 to form a PN junction. Accordingly, when a DC driving voltage is applied across the movable electrode 24 and the silicon substrate 21 with the former negative with respect to the latter, the PN junction becomes reverse-biased, inhibiting the passage of DC current through the stationary part 22 and the polysilicon film 2d.

With the manufacturing method described above, after the formation of the movable electrode 24, the elastic support portions 23a, 23b and so forth, the low-floor portion 21L deep enough to allow displacement of the movable electrode 24 can be formed in the substrate 21 by selectively etching it away from the side where the above-mentioned elements have been provided. And the bottom of the low-floor area 21L serves as the fixed electrode surface opposite to the movable electrode 24.

Thus, this embodiment dispenses with the bonding step needed in the manufacture of the optical switch 20 of the Fig. 2 embodiment, and hence it permits accurate and easy fabrication of the optical switch accordingly.

Besides, since there is no need of forming the opening 21a in the substrate 21A as shown in Figs. 2A and 2B, that is, since the substrate 21 is not frame-shaped, the region needed for providing the required frame width becomes unnecessary, making the optical switch 20 smaller accordingly.

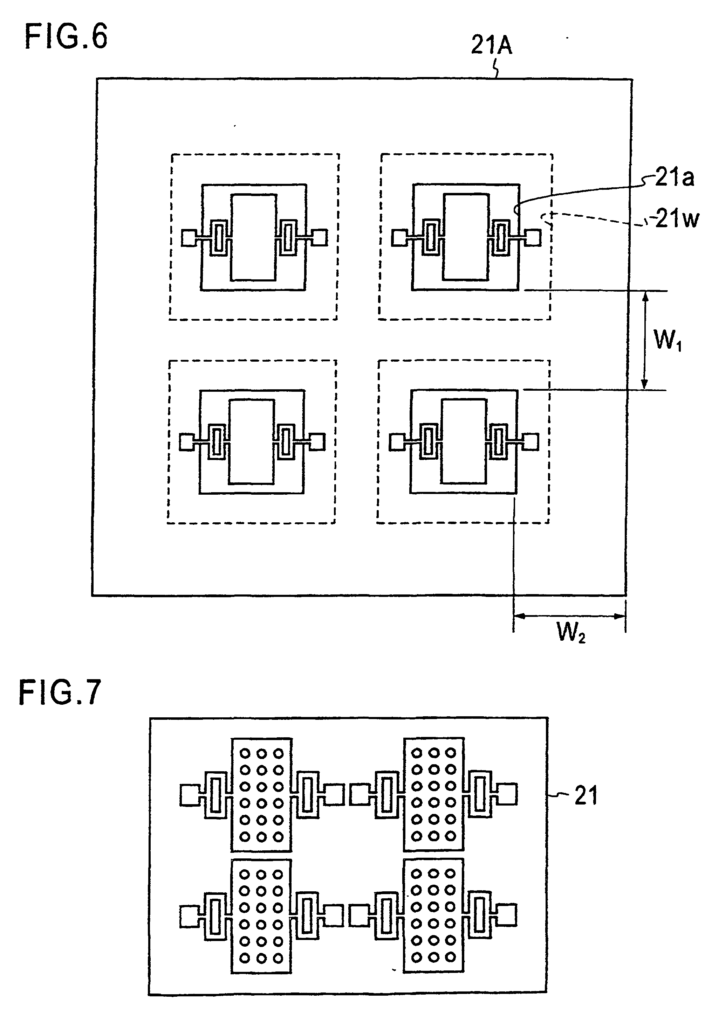

Figs. 6 and 7 conceptually show the difference in size between two-by-two arrays of optical switches of the Fig. 2 and the Fig. 4 structure, respectively.

In the case of Fig. 6, when the opening 21a is formed by anisotropic etching in the substrate 21A of, for example, 400 µm thick, the formation of the opening 21a measuring 1 by 1 mm in the substrate surface requires the formation of an approximately 1.6 by 1.6 mm etching window 21w in the underside of the substrate. In view of the mechanical strength and the bonding area for the substrate 21B, it is necessary that widths W₁ and W₂ be at least 1 mm or so. As will be seen from Fig. 6, these frame portions cause a significant loss of the effective area of the optical switch array.

In contrast to the above, the optical switch array of Fig. 7 does not require the above-mentioned frame portions, and permits a substantial reduction in the spacing between adjacent switching elements (for example, 10 µm or less). Accordingly, the optical switch structure of the Fig. 7 embodiment is extremely suitable for miniaturization of the switch array.

As described above, the optical switch of the first embodiment does not require the formation of the frame-like region of the substrate 21A around each switching element as in the case of the optical switch 20 depicted in Figs. 2A and 2B. Hence, the matrix-type optical switch array can be made particularly small. Besides, the miniaturization of the device structure further reduces the optical path, providing increased optical performance.

Moreover, this embodiment does not utilize such a substrate-bonded structure as in the optical switch of Fig. 2, and hence it solves a problem such as a decrease in the positioning accuracy of the fixed electrode surface by bonding or the influence of stress during bonding. Additionally, since no bonding step is involved, the manufacturing process can be simplified accordingly.

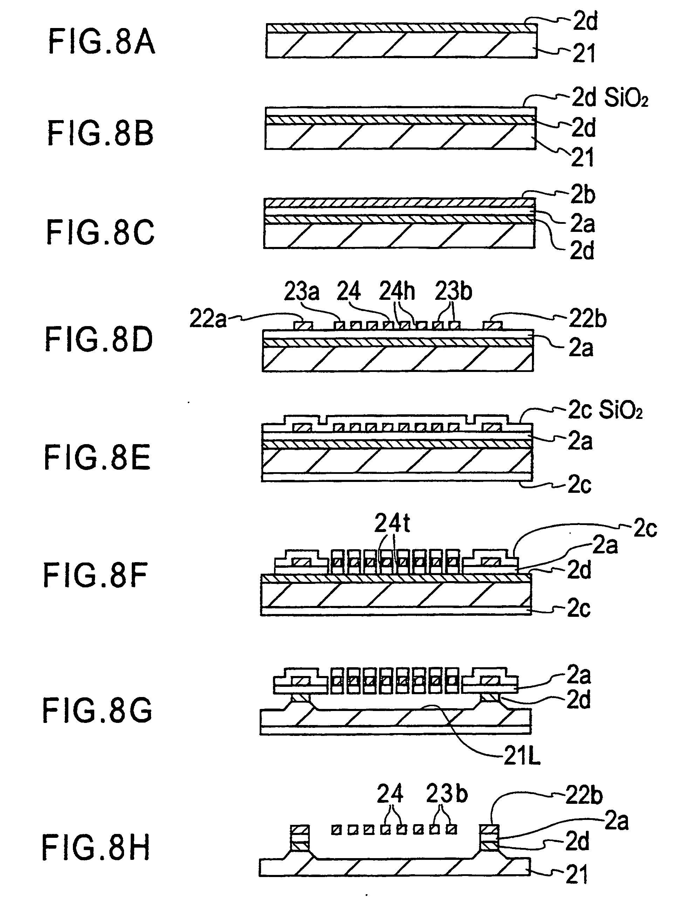

In the manufacturing process of the optical switch of this embodiment described above in respect of Figs. 5A to 5I, the polysilicon film 2d and the silicon substrate 21 are made reverse in conductivity type, a PN junction is formed in the substrate under its surface, and the polysilicon film 2b forming the movable electrode 24 and the elastic support portion 23 is connected to the polysilicon film 2d through the holes 2ah made in the SiO₂ protective film 2a as shown in Fig. 5C. As depicted in Figs. 8A through 8H, however, the SiO₂ protective film 2a may also be left as an insulating layer without making the holes 2ah in the step of Fig. 5C. That is, the polysilicon film 2b is formed all over the SiO2 protective film 2a coated in the step of Fig. 8B and then exactly the same manufacturing steps of Figs. 8D to 8H as in Figs. 5E to 5I are carried out, by which the polysilicon film 2d and the SiO2 film as the insulating layer 2a are left unremoved between the silicon substrate 21 and the stationary portions 22.

### SECOND EMBODIMENT

As described previously, the present invention utilizes electrostatic drive for moving up and down by ON-OFF control of the voltage that is applied across the movable electrode and the fixed electrode, but the Fig. 2 embodiment requires a relatively large driving voltage. To reduce the driving voltage, it is necessary to make the elastic support portions 22a and 22b flexible by increasing their lengths and/or to increase the area of the movable electrode 24. To lengthen the elastic support portions 22 and to increase the area of the movable electrode 24 will inevitably make the optical switch large. This will surely incur undesirable marked upsizing of a large-scale multi-input-multi-output optical switch array (a matrix optical switch) of optical switches arranged in an N-by-M matrix form. A description will be given of an optical switch improved to lower the driving voltage without making the switch large.

In this embodiment, a switch region 40 is chosen to be square which is defined by the envelope of the outer periphery of the region occupied by a movable electrode panel and elastic support portions. A movable electrode in the switch region 40, a mirror standing upright on the movable electrode, and the elastic support portions also in the switch region 40 are disposed above a substrate that forms a fixed electrode opposite the movable electrode panel. The elastic support portions are coupled at one end to marginal edges of the movable electrode and at the other end to the substrate at marginal edges of the switch region 40. The elastic support portions are extended in zigzag between the opposite ends so that they occupy substantially the entire switch region except those occupied by the movable electrode. With such a structure, it is possible to maximize the utilization of the electrode area in the switch region, decreasing the driving voltage accordingly.

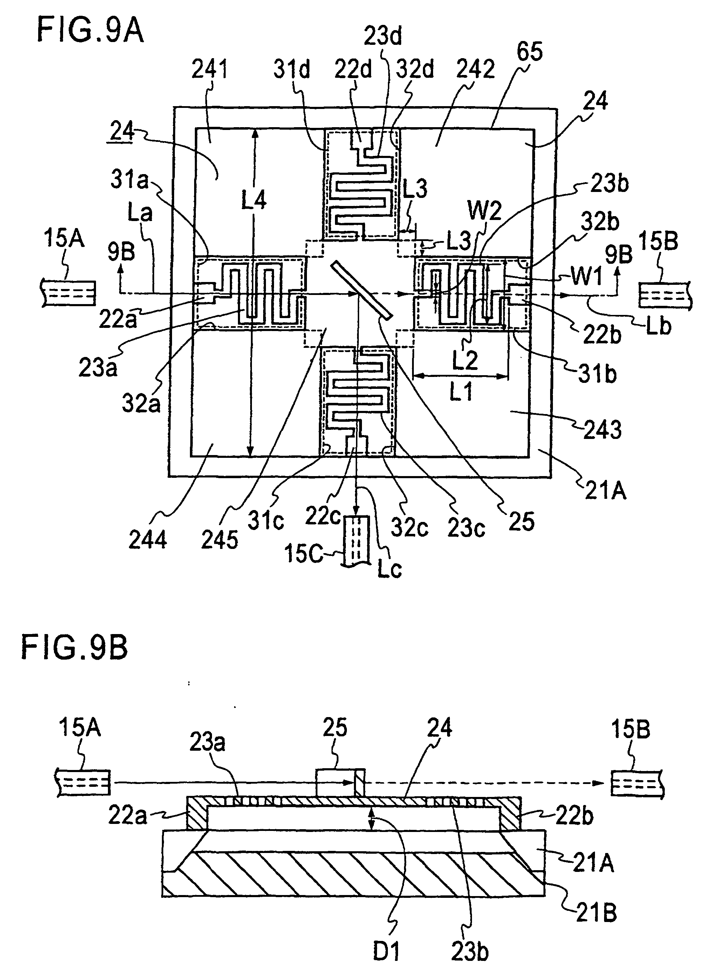

Figs. 9A and 9B illustrate the optical switch according to the second embodiment of the present invention. A movable electrode panel 24 is disposed above a square substrate 21A in parallel therewith and supported thereto by elastic support portions 23a to 23d. With a view to increasing its length, each of the support portions 23a to 23d is provided in the form of a zigzag beam in substantially the same plane as that of the movable electrode panel 24. The regions 31a to 31d occupied by the support portions 23a to 23d and the region by the movable electrode panel 24 (241 to 245) constitute a switch region substantially square in its entirety in this example, that is, a square switch region (which will hereinafter be referred to also as a switch envelope) 40 whose one side is denoted by L4.

In this embodiment, the square movable electrode panel 24 has rectangular cut-out openings 32a to 32d in the central portions of its four sides and the elastic support portions 23a to 23d are disposed in the cut-out openings 32a to 32d. The elastic support portions 23a to 23d have their outer ends connected to stationary portions 22a to 22d standing on the substrate 21A at mid-points of the respective sides of the movable electrode panel 24 and have their inner ends connected to the movable electrode panel 24 at mid-points of the inner ends of the cut-out openings 32a to 32d. The elastic support portions 23a to 23d are extended in zigzag form between their inner and outer ends across the entire regions of the cut-out openings 23a to 23d, respectively.

That is, the elastic support portions 23a to 23d are connected at their inner end to the mid-points of the respective sides of the central square portion 245 of the movable electrode panel 24, extended outwardly in zigzag and connected to the stationary portions 22a to 22d, respectively. The peripheral square portions 241, 242 and 243 of the movable electrode panel 24 overlap four corners of the central square portion 245 alternately with the elastic support portions 23a to 23d. The width L2 of the zigzag elastic support portion 23 is chosen to be a little smaller than the width W1 of the cut-out opening 32.

The elastic support portions 23a to 23d are connected to the upper ends of the stationary portions 22a to 22d on the substrate 21A, by which the movable electrode panel 24 is supported at a distance D1 from the substrate 21A. Because of their zigzag beam-like structure, the support portions 23a to 23d are elastic, and consequently, the movable electrode panel 24 can be displaced vertically to the substrate 21A. The substrate 21A, the movable electrode panel 24, the support portions 23a to 23d and the stationary portions 22a to 22d can be formed as a one-piece structure.

The optical switch structure of this embodiment is common to the structure of the Fig. 2 embodiment except in the patterns of the movable electrode panel 24 and the elastic support portions 23a to 23d. Accordingly, the optical switch of this embodiment can similarly be manufactured using, for example, the same manufacturing steps as those depicted in Figs. 3A to 3I. That is, the SiO₂ protective film 2a is formed all over the silicon substrate 21A as depicted in Fig. 3A (Step S1), and the protective film 2a is selectively removed by photolithography to form therein the holes 2ah at those positions where to provide the stationary portions 22a to 22d as depicted in Fig. 3B (step S2). Then, the polysilicon layer 2c for forming the movable electrode panel 24 is deposited over the entire surface area of the substrate assembly as depicted in Fig. 3C (step S3), and the polysilicon layer 2b is patterned by photolithography to form the movable electrode panel 24, the support portions 23a to 23d and the stationary portions 22a to 22d as depicted in Fig. 3D (step S4).

Next, the SiO₂ protective film 2c is formed over the entire surface area of the substrate assembly and all over the underside of the substrate 21A as depicted in Fig. 3E (step S5), then the protective film 2c coated all over the underside of the substrate 21A is removed leaving only at its marginal portion as depicted in Fig. 3F, and the substrate 21A is etched away by the KOH solution with the remaining protective film 2c as a mask (step S6), by which the large opening 21a is formed in the portion of the substrate 21A corresponding to the movable electrode panel 24, leaving the substrate 21A only at its marginal portion (Step S7). After this, the SiO₂ protective films 2a, 2b and 2c are removed by chemical etching to obtain a structure that supports the movable electrode panel 24 above the frame-shaped substrate 21A as depicted in Fig. 3H (step S8). Next, as shown in Fig. 3I, the conductive silicon substrate 21B is fitted into the opening 21B of the substrate 21A from the side opposite to the movable electrode panel 24 and bonded to the substrate 21A.

The mirror 25 is placed on the movable electrode panel 24 as shown in Figs. 9A and 9B by the same method as described previously in respect of the first embodiment. The mirror 25 is disposed, for instance, at 45 degrees to the direction of a line joining the resilient support portions 23a and 23b. The mirror 25 may be formed integrally with the movable electrode panel 24, or separately formed and fixedly secured to the movable electrode panel 24. The movable electrode panel 24 and the elastic support portions 23a to 23d are formed, for example, 2 to 5 µm thick.

While this embodiment has been described to bond the conductive substrate 21B to the frame-shaped substrate 21A as is the case with the optical switch of Fig. 2, it is also possible to form, as the fixed electrode, the low-floor portion 21L in the conductive substrate 21 as in the first embodiment depicted in Figs. 4A and 4B.

With the optical switch of this embodiment, too, the light beam La from the incoming-side optical fiber 15A disposed at the left-hand side in Fig. 9A is incident on and reflected by the mirror 25 and then launched into the outgoing-side optical fiber 15C. When a voltage is applied across the movable electrode panel 24 and the substrate 21B to generate therebetween electrostatic force, the movable electrode panel 24 is displaced toward the substrate 21B, allowing the light beam La from the optical fiber 15A to pass over the mirror 25 for incidence on the other outgoing-side optical fiber 15B disposed at the right-hand side in Fig. 9A. Thus, the light beam La from the optical fiber 15A can selectively be switched between the optical fibers 15B and 15C by selective voltage application across the movable electrode panel 24 and the substrate 21B.

The optical switch of this embodiment has such dimensions as follows: 1000 µm for the length L4 of one side of the movable panel 24; 300 µm for the length L1 of each of the elastic support portions 23a to 23d; 200 µm for the width L2 of each zigzag support portion; 10 µm for the width W2 of the zigzag beam; 50 by 50 µm for a square cross-section of each of the stationary portions 22a to 22d; and 30 µm for the length L3 of each portion common to the central square portion 32a and each of the peripheral square portions 241 to 244.

Since the square movable electrode panel 24 is partly cut out to form therein openings and the elastic support portions 23a to 23d are disposed in the cut-out openings 32a to 32d, the area of the square movable electrode panel 24 can be made large. And since the elastic support portions 23a to 23d are each provided in the form of a zigzag beam, the beam is long relative to the length L1 of the support potion 23, making it possible to obtain a required amount of displacement with a small amount of electrostatic force. In the first embodiment shown in Figs. 2A and 2B, the movable electrode panel 24 is limited only to the central square portion 245, but in this embodiment the elastic support portions 23a to 23d and the peripheral square portions 241 5o 244 are alternately disposed about the central square portion 245 and connected thereto--this provides a markedly increased area for the movable electrode panel 24. In the above examples of various numerical values, the area of the central square portion 245 is 300 by 300 µm², and hence it can be said that the area of the movable electrode panel 24 is larger than in the Fig. 2 embodiment by the sum of the areas of the four peripheral square portions 241 to 244, that is, by 4×380×380 µm. Conversely, the cut-out openings are provided in the movable electrode panel 24 and the elastic support portions 23a to 23d are disposed in the cut-out openings, by which the entire structure is significantly reduced in size. A description will be given below of some examples of configurations of the movable electrode, each elastic support portion and each stationary portion.

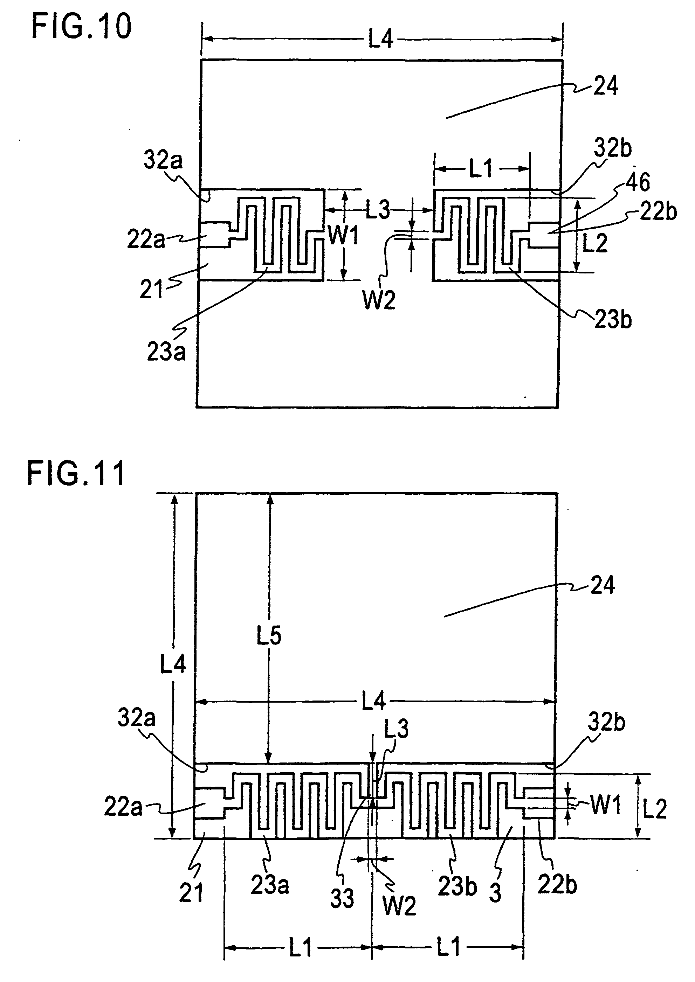

While in the Fig. 9 embodiment the movable electrode panel 24 is supported at four points by the elastic support portions 23a to 23d at 45-degree intervals around the center of the panel 24, it may also be supported at two points by two elastic support portions 23a and 23b at 180-degree intervals as depicted in Fig. 10. In this case, the optical switch has such dimensions as listed below. The movable electrode pane 24 is a square panel (which have two rectangular cut-out openings 32a and 32b) measuring 1000 by 1000 µm; the length L1 of each of the elastic support portions 23a and 23b is 300 µm; the width L2 of each zigzag support portion is 200 µm; the beam width W2 is 10 µm; the stationary portions 22a and 22b each have a cross-section measuring 5 by 50 µm; the distance L3 between the inner ends of the cut-out openings 32a and 32b is 300 µm; and the width W1 of each of the cut-out openings 32a and 32b is 240 µm. Incidentally, in the Fig. 10 embodiment the substrate 21 has about the same configuration as the square configuration of the movable electrode panel 24. That is, the size of this optical switch in the horizontal plane is the same as the size of the movable electrode panel 24, and the outside shape of the optical switch is 100 by 100 µm in the afore-mentioned examples of various numerical values.

The movable electrode panel 24 may also be supported at one point as depicted in Fig. 11. That is, two elastic support portions 23a and 23b are disposed along one side of the movable electrode panel 24, and the elastic support portions 23a and 23b have their far ends connected to the substrate 21 through the stationary portions 22a and 22b, respectively, and have their near ends interconnected, the interconnecting point being connected to the mid-point of the adjoining side of the movable electrode panel 24 through a coupling portion 33. In other words, the movable electrode panel 24 is supported at one side by the elastic support portions 23a and 23b through the coupling portion 33. It can be said that the elastic support portions 23a and 23b are provided in the cut-out openings 32a and 32b formed by cutting out part of the square movable electrode panel 24 along one side thereof.

An example of numerical values in this case is as follows: 1000 µm for the longer side L4 of the movable electrode panel 24; 780 µm for its shorter side L5; 450 µm for the length L1 of each of the elastic support portions 23a and 23b; 200 µm for the width L2 of each zigzag support portion; 10 µm for the beam width W1; 115 µm for the length L3 of the coupling portion 33; 10 µm for its width W2; and 50 by 50 µm for the cross-section of each of the stationary portions 22a and 22b. The outer dimension of the optical switch is 1000 by 1000 µm.

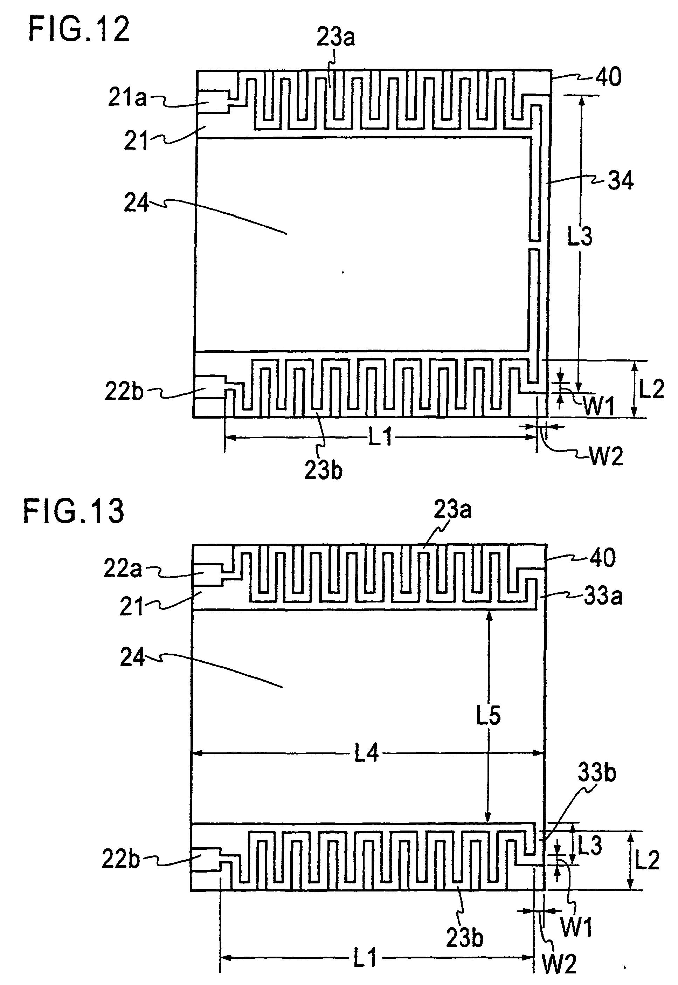

The movable electrode panel 24, though supported at one point, may also be formed as shown in Fig. 12. That is, the elastic support portions 23a and 23b are disposed along two longer sides of a rectangular movable electrode panel 24, respectively; the elastic support portions 23a and 23b are connected at one end of the same side to the substrate 21 through the stationary portions 22a and 22b, respectively, and connected at the other end to opposite ends of a coupling beam 34, which is connected at its mid-point to that of one shorter side of the movable electrode panel 24. Thus, the movable electrode panel 24 is surrounded, except one shorter side, by the elastic support portions 23a and 23b and the coupling beam 34. It can be said that after two opposed marginal portions of a square movable electrode panel 24 are cut off, the support portions 23a and 23b are disposed there instead. With this structure, the lengths of the elastic support portions 23a and 23b can be increased.

Various dimensions in this instance are such, for example, as follows: 940 µm for the length L1 of each of the elastic support portions 23a and 23b, 200 µm for the length L2 of each zigzag support portion, 10 µm for the beam width, 810 µm for the length L3 of the coupling beam 34, 10 µm for its width W2, 50 by 50 µm for the cross-section of each of the stationary portions 22a and 22b; 970 µm for the longer side L4 of the movable electrode panel 24, and 560 µm for its shorter side L5. The outer dimension of the optical switch is 1000 by 1000 µm.

As depicted in Fig. 13, the coupling beam 34 may be omitted, in which case the elastic support portions 23a and 23b are coupled to both ends of the shorter side of the movable electrode panel 24 through coupling portions 33a and 33b, respectively. Various dimensions in this case are such, for example, as follows: 940 µm for the length L1 of each of the resilient support portions 23a and 23b; 200 µm for the width L2 of each zigzag support portion; 10 µm for the beam width; 125 µm for the length L3 of each of the coupling portions 33a and 33b; 10 µm for their widths W2; 50 by 50 µm for the cross-section of each of the stationary portions 22a and 22b; 1000 µm for the longer length L4 of the movable electrode panel 24; and 560 µm for its shorter side L5. The outer dimension of the optical switch is 1000 by 1000 µm.

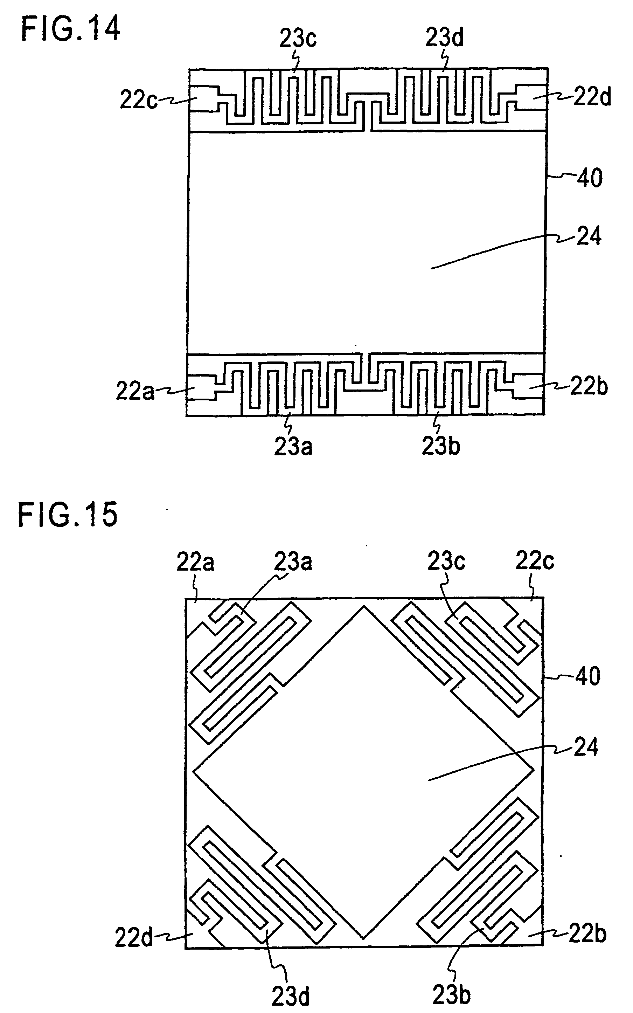

Fig. 14 illustrates another modified form of the Fig. 11, in which the elastic support portions 23c, 23d are provided in the movable electrode panel 24 on the side away from the resilient support portions 23a, 23b are coupled to each other and the coupling portion is connected to the movable electrode panel 24. Thus, the movable electrode panel 24 is supported at two points.

Fig. 15 illustrates another embodiment of the present invention, in which a square movable electrode panel 24 is disposed at an angle of 45 degrees to a square optical-switch outside shape or envelope 40 with its vertexes at the mid-points of respective sides of the envelope 40 and the support portions 23a to 23d are connected at one end to the mid-points of respective sides of the movable electrode panel 24 and at the other end to the stationary portions 22a to 22d formed upright on the substrate 21 at four corners of the optical switch envelope 40. The width of zigzag configuration of each of the support portions 23a to 23d increases toward the movable electrode panel 24 but decreases toward the stationary portion, thus making effective use of empty space between the movable electrode panel 24 and the optical switch envelope 40. In this instance, too, it can be said that four corner portions of an electrode of the same size as the optical switch envelope 40 are cut away to form the movable electrode panel 24 centrally thereof and the support portions 23a to 23d are provided in the cut-out openings.

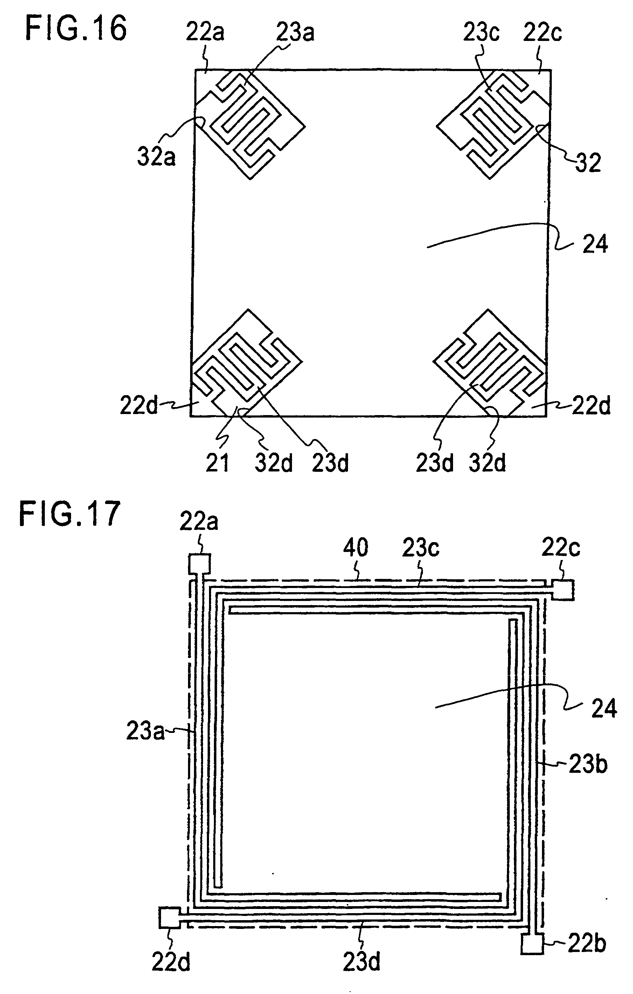

It is also possible to employ such a structure as depicted in Fig. 16 in which the movable electrode panel 24 has about the same outside shape as that of the optical switch envelope 40 and has rectangular cut-out openings 32a to 32d extending from the four corners of the electrode panel 24 toward the center thereof, and the support portions 23a and 23d are disposed in the cut-out openings 32a to 32d, respectively, and have their inner ends connected to the movable electrode panel 24 and have their outer ends connected to the substrate 21 through the stationary portions 22a to 22d.

In an embodiment depicted in Fig. 17, a square movable electrode panel 24 is disposed in a square switch region centrally thereof and the elastic support portion 23a to 23d are extended in parallel to its sides in the same direction of rotation and turned or bent 90 degrees in the same direction at the next corners and then each extended outside the inner support portion parallel to the adjoining side and projected out of the switch region 40, the projected ends being fixed to the stationary portions 22a through 22d. With this structure, the elastic support portions 23a to 23d each have only one bend and form a long support portion. In the case of the same length, the elastic constant increases with an increase in the number of bends. Accordingly, the structure of this embodiment provides support portions of low elastic constant and hence permits driving the optical switch at low voltage.

While the embodiments described above have been described to use the conductive polysilicon film to form the movable electrode and elastic support portions in one piece, other conductive films as of metal may also be used. Furthermore, the above embodiment have been described to use the micro mirror 25 for switching the optical path of the incoming light beam, a micro prism may also be used as such an optical path switching element in place of the micro mirror.

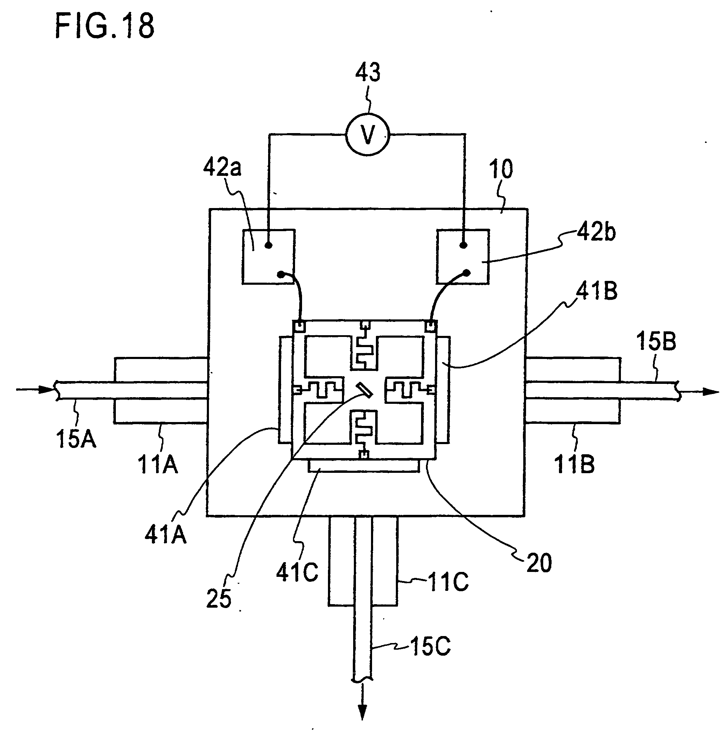

Fig. 18 schematically illustrates an example of an optical switch module actually formed using the optical switch according to the present invention. The optical switch 20 employs, in the Fig. 4 embodiment, the structures of the movable conductive panel 24 (241 to 245), the elastic support portions 23a to 23d and the stationary portions 22a and 22d depicted in Fig. 9 (none of these reference numerals being shown for simplicity sake). The optical switch 20 is mounted on a rectangular glass substrate 10. Attached to three sides of the glass substrate 10 are V-groove blocks 11A, 11B and 11C, and the incoming-side optical fiber 15A and two outgoing-side optical fibers 15B and 15C are received in the V-grooves with their optical axes kept in alignment with the micro mirror 25 of the optical switch 20. The movable electrode panel 24 and the fixed electrode are connected by wire bonding to terminal electrodes 42a and 42b on the glass substrate 10, and a driving voltage is applied across the terminal electrodes 42a and 42b from a driving voltage source 43.

On the optical switch 20 there are placed plane micro lenses (PMLs) 41A, 41B and 41C along its three marginal edges. These PMLs 41A, 41B and 41C are high enough to stay in the optical path even when the movable electrode panel 24 is displaced to a maximum. The incident light from the optical fiber 15A is reduced in diameter by the PML 41A down to a minimum at the position of the mirror 25 and then spreads again. When the mirror 25 is displaced by the application of the driving voltage, the light beam from the optical fiber 15A passes through the PML 41A and is reduced again in diameter by the PML 41B, thereafter being launched into the optical fiber 15B. With no driving voltage applied, the light beam reflected by the mirror 25 is reduced again in diameter by the PML 41C and then launched into the optical fiber 15C. In our experiments, the light beam emitted from the optical fiber 15A spread thick about 140 µm in diameter until it impinged on the PML 41A but reduced down to 33 µm until it reached the mirror 25 from the PML 41A. The mirror 25 was 45 µm in height.

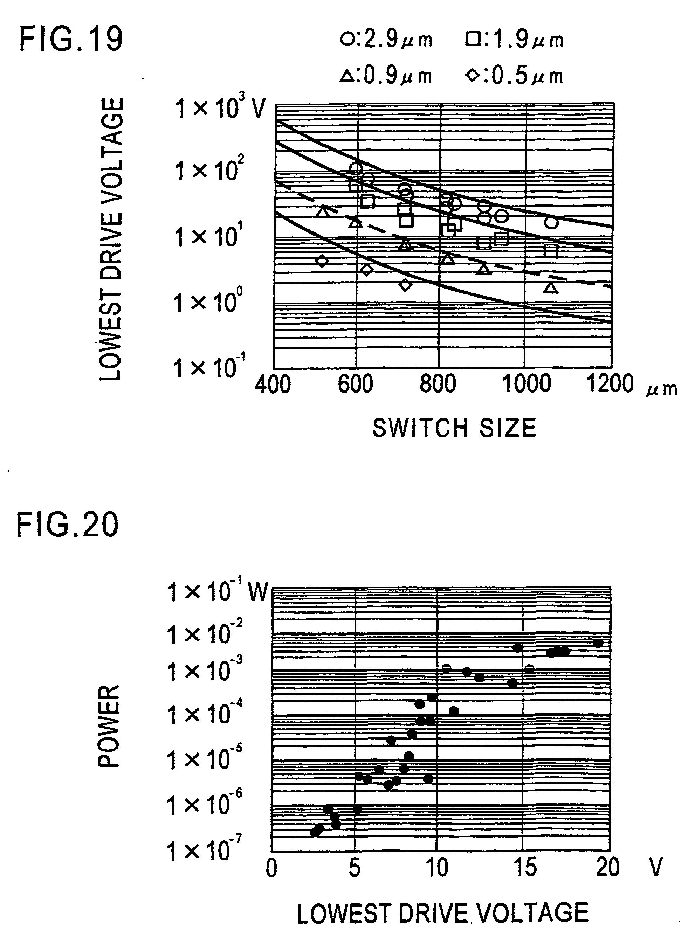

Fig. 19 is a graph showing measured values of the minimum driving voltage in the optical switch module of Fig. 18 with respect to variations in the size of the movable electrode (the length of its one side) using the thickness of the elastic support portion 23 as a parameter. The wavelength of light used is 1.55 µm. The solid lines indicate calculated values by simulation. The minimum driving voltage decreases with a decrease in the thickness of the elastic support portion or an increase in the size of the movable electrode. The measured results shown in Fig. 19 suggest that an optical switch of a driving voltage below 5V could be obtained, and indicate that an ultraminiature optical switch with a 600-µm movable electrode size could be realized if the thickness of the elastic support portion would be 0.5 µm, for instance.

Fig. 20 is a graph showing the relationships between the minimum driving voltages of optical switches having elastic support portions of various thicknesses and movable electrode sizes and their power consumption. As will be seen from the graph, it is possible to produce a power-saving optical switch whose driving voltage is lower than 5 V and power consumption is less than several µW. Accordingly, the optical switch of the present invention is suitable for use in optical networks. In our experiments the optical switch was driven by ON-OFF control of DC voltage, but electrostatic attractive force between electrodes can similarly be obtained even with AC driving voltage.

### EFFECT OF THE INVENTION

According to a first aspect of the present invention, the surface region of the conductive substrate opposite the movable electrode panel and the elastic support portion is etched away to form the low-floor portion that is used as the fixed electrode. This eliminates the necessity for making an opening in the substrate as in the prior art and hence permits fabrication of a matrix optical switch with no wasted space.

According to a second aspect of the present invention, since the region where the movable electrode panel and the support portions is square, the optical switch can be miniaturized and the area of the movable electrode panel can be made large--this allows effective use of the area of the outside shape of the optical switch structure and permits low-voltage driving of the switch.

It will be apparent that many modifications and variations may be effected without departing from the scope of the present invention.

## Claims

1. An optical switch having an optical path switching means (25) which is displaceable from and into an optical path, comprising:
conductive substrate means (21);
a low-floor portion (21L) formed, as fixed electrode means, in said conductive substrate means (21) at a level lower than its surface and in parallel thereto;
movable electrode means (24) disposed opposite to said fixed electrode means in spaced relation thereto and held above the surface of said conductive substrate means (21); and
elastic support means (22a, 22b, 23a, 23b) for coupling said movable electrode means (24) and said conductive substrate means (21) and for elastically supporting said movable electrode means (24) so that said movable electrode means (24) can be displaced vertically to the surface of said fixed electrode means;
wherein said optical path switching means (25) is provided on the surface of said movable electrode means (24) opposite said fixed electrode means and has a light receiving surface vertical to the surface of said movable electrode means (24); and
wherein, by ON-OFF control of voltage application across said movable electrode means (24) and said fixed electrode means (21L), said movable electrode means (24) is displaced toward said fixed electrode means and returned to its normal position to selectively switch the optical path of an incident light beam by said optical path switching means (25).

2. The optical switch of claim 1, wherein said elastic support means (22a, 22b, 23a, 23b) has a plurality of elastic support portions (23a, 23b) for coupling a plurality of different marginal portions of said movable electrode means (24) to said conductive substrate means (21).

3. The optical switch of claim 1, wherein said elastic support means (22a, 22b, 23a, 23b) has fixing means (22a, 22b) of increased thickness coupled to said conductive substrate means (21), for supporting said elastic support means (23a, 23b) and said movable electrode means (24) above the surface of said conductive substrate means (21).

4. The optical switch of claim 1, 2, or 3, wherein said movable electrode means (24) and said elastic support means (22a, 22b, 23a, 23b) are integrally formed of the same material.

5. The optical switch of claim 4, wherein: said conductive substrate means (21) is a silicon substrate of either one of P and N conductivity types; said movable electrode means (24) and said elastic support means (22a, 22b, 23a, 23b) are integrally formed by a polysilicon film of the other conductivity type; and a PN junction is formed in said silicon substrate under the surface thereof at a portion coupled to said elastic support means.

6. The optical switch of claim 5, wherein said movable electrode means (24) has a plurality of through holes (24h).

7. The optical switch of claim 1, wherein said elastic support means (22a, 22b, 23a, 23b) includes an insulating layer (2a in Fig. 8H) coupled to said conductive substrate means (21), for electrically insulating said conductive substrate means (21) and said elastic support means.

8. The optical switch of claim 1, wherein said elastic support means (22a, 22b, 23a, 23b) has two elastic support portions (23a, 23b) extending in opposite directions from two opposite sides of said movable electrode means (24).

9. The optical switch of claim 8, wherein said two elastic support portions (23a, 23b) are each in the shape of a rectangular frame and coupled substantially at the centers of its two opposed sides to said movable electrode means (24) and said conductive substrate means (21), respectively.

10. The optical switch of claim 1, wherein a substantially rectangular switch region is defined by the envelope of the periphery of a region occupied by said movable electrode means (24) and said elastic support means (22a, 22b, 22c, 22d, 23a, 23b, 23c, 23d).

11. The optical switch of claim 10, wherein: said movable electrode means (24) has a substantially rectangular central electrode portion (245) disposed inside said switch region concentrically therewith with its respective sides extending in parallel with those of said switch region, and four substantially rectangular peripheral electrode portions (241-244) each having a first corner portion overlapping one of four corner portions of said central electrode portion (245) and a second corner portion diagonally opposite said first corner portion; and said elastic support means has four elastic support portions (23a, 23b, 23c, 23d) each extending in zigzag form across the entire area of a rectangular region defined between said peripheral electrode portions (241-244) adjacent thereto and coupled at one end to said central electrode portion and at the other end to said conductive substrate means (21) at a marginal edge of said switch region.

12. The optical switch of claim 10, wherein said elastic support means (22a, 22b, 22c, 22d, 23a, 23b, 23c, 23d) includes two elastic support portions (23a, 23b) each extending in zigzag form across the entire area of one of two substantially rectangular regions (32a, 32b) of the same size extended toward each other from two opposite sides of said switch region and coupled at one end to said movable electrode means (24) and at the other end to said conductive substrate means (21).

13. The optical switch of claim 12, wherein: said movable electrode means (24) is a rectangle occupying one of two regions divided from said switch region along a straight line parallel to one side thereof; said two rectangular regions (32a, 32b) are defined to occupy the other region and extend along the same side of said rectangular region; and said one end of each of said two elastic support portions is coupled to said movable electrode means (24) at the same point.

14. The optical switch of claim 10, wherein: said movable electrode means (24) is a rectangle occupying a central one of three regions divided from said switch region along two straight lines parallel to one side thereof; and said elastic support means (23a, 23b) is extended in zigzag form across the entire area of said rectangular region at either side of said movable electrode means (24).

15. The optical switch of claim 14, wherein one end of said elastic support means (23a, 23b) is coupled to said conductive substrate means (21) on one of shorter sides of said rectangular region and the other end of said each elastic support portion is extended from the other shorter side along a side at right angles to said one side of said switch region and coupled to said movable electrode means (24) on its shorter side.

16. The optical switch of claim 14, wherein said extended elastic support means (23a, 23b) are coupled at one end to said conductive substrate means (21) at one of shorter sides of said rectangle and at the other end to two corner portions of said movable electrode means (24) on the other shorter side.

17. The optical switch of claim 14, wherein said extended elastic support means (23a, 23b, 23c, 23d) is coupled at both ends to said conductive substrate means (21) on both shorter sides of said rectangle and coupled to said movable electrode means (24) on the longer side of said rectangle substantially at the center thereof.

18. The optical switch of claim 10, wherein: said switch region (40) is substantially square; said movable electrode means (24) has substantially a square form with its vertexes at the centers of respective sides of said switch region (40); said elastic support means (23a, 23b, 23c, 23d) is coupled at one end to each side of said movable electrode means (24), extended in zigzag form across the entire area of each of four triangular regions outside said movable electrode means (24) in said switch region (40) and coupled to said conductive substrate means (21) at that one of four corner portions of said switch region which is opposite said each side.

19. The optical switch of claim 10, wherein: said switch region is substantially square; said elastic support means (23a, 23b, 23c, 23d) is coupled to said conductive substrate means (21) at each corner portion of said switch region, extended in zigzag form across the entire area of substantially a rectangular support region (32a, 32b, 32c, 32d) extended from said each corner portion of said switch region toward the center thereof and coupled to said movable electrode means (24) on the side of said support region away from said each corner portion.

20. The optical switch of claim 10, wherein: said movable electrode means (24) has a rectangular form having sides parallel to respective sides of said switch means; and said elastic support means (23a, 23b, 23c, 23d) has four beam-like elastic support portions coupled at one end to respective corner portions of said movable electrode means, extended in the same direction of rotation at least one of respective sides of said movable electrode means in parallel thereto and coupled at the other end to said conductive substrate means (21).

21. An optical switch having an optical path switching means (25) which is displaceable from and into an optical path, comprising:
substrate means (21A) having an opening (21a);
fixed electrode means (21B) attached to said substrate means to close said opening (21a), said fixed electrode means having a surface at a level lower than a surface of said substrate means (21A) in parallel thereto;
movable electrode means (24) disposed opposite to said fixed electrode means (21B) in spaced relation thereto and held above the surface of said substrate means (21A); and
elastic support means (22a, 22b, 22c, 22d, 23a, 23b, 23c, 23d) for coupling said movable electrode means (24) and said substrate means (21A) and for elastically supporting said movable electrode means (24) so that said movable electrode means (24) can be displaced vertically to the surface of said fixed electrode means (21B);
wherein said optical path switching means (25) is provided on the surface of said movable electrode means (24) opposite said fixed electrode means (21B) and has a light receiving surface vertical to the surface of said movable electrode means (24); and
wherein a switch region defined by the envelope of the periphery of a region occupied by said movable electrode means (24) and said elastic support means is substantially rectangular, and by ON-OFF control of voltage application across said movable electrode means (24) and said fixed electrode means (21B), said movable electrode means is displaced toward said fixed electrode means and returned to its normal position to selectively switch the optical path of an incident light beam by said optical path switching means (25).

22. The optical switch of claim 21, wherein: said movable electrode means (24) has a substantially rectangular central electrode portion (245) disposed inside said switch region concentrically therewith with its respective sides extending in parallel with those of said switch region, and four substantially rectangular peripheral electrode portions (241-244) each having a first corner portion overlapping one of four corner portions of said central electrode portion (245) and a second corner portion diagonally opposite said first corner portion; and said elastic support means has four elastic support portions (23a, 23b, 23c, 23d) each extending in zigzag form across the entire area of a rectangular region defined between said peripheral electrode portions adjacent thereto and coupled at one end to said central electrode portion (245) and at the other end to said substrate means (21A) at a marginal edge of said switch region.

23. The optical switch of claim 21, wherein said elastic support means includes two elastic support portions (23a, 23b) each extending in zigzag form across the entire area of one of two substantially rectangular regions (32a, 32b) of the same size extended toward each other from two opposite sides of said switch region and coupled at one end to said movable electrode means (24) and at the other end to said substrate means.

24. The optical switch of claim 23, wherein: said movable electrode means (24) is a rectangle occupying one of two regions divided from said switch region along a straight line parallel to one side thereof; said two rectangular regions (32a, 32b) are defined to occupy the other region and extend along the same side of said rectangular region; and said one end of each of said two elastic support portions (23a, 23b) is coupled to said movable electrode means (24) at the same point.

25. The optical switch of claim 21, wherein: said movable electrode means (24) is a rectangle occupying a central one of three regions divided from said switch region along two straight lines parallel to one side thereof; and said elastic support means (23a, 23b) is extended in zigzag form across the entire area of said rectangular region at either side of said movable electrode means (24).

26. The optical switch of claim 25, wherein one end of said elastic support means (23a, 23b) is coupled to said substrate means (21A) on one of shorter sides of said rectangular region and the other end of said each elastic support portion is extended from the other shorter side along a side at right angles to said one side of said switch region and coupled to said movable electrode means (24) on its shorter side.

27. The optical switch of claim 25, wherein said extended elastic support means (23a, 23b) are coupled at one end to said substrate means at one of shorter sides of said rectangle and at the other end to two corner portions of said movable electrode means (24) on the other shorter side.

28. The optical switch of claim 25, wherein said extended elastic support means (22a, 22b, 22c, 22d, 23a, 23b,23c, 23d) is coupled at both ends to said substrate means on both shorter sides of said rectangle and coupled to said movable electrode means (24) on the longer side of said rectangle substantially at the center thereof.

29. The optical switch of claim 21, wherein: said switch region is substantially square; said movable electrode means (24) has substantially a square form with its vertexes at the centers of respective sides of said switch region; said elastic support means (22a, 22b, 22c, 22d, 23a, 23b, 23c, 23d) is coupled at one end to each side of said movable electrode means (24), extended in zigzag form across the entire area of each of four triangular regions outside said movable electrode means (24) in said switch region and coupled to said substrate means at that one of four corner portions of said switch region which is opposite said each side.

30. The optical switch of claim 21, wherein: said switch region is substantially square; said elastic support means (22a, 22b, 22c, 22d, 23a, 23b, 23c, 23d) is coupled to said substrate means at each corner portion of said switch region, extended in zigzag form across the entire area of substantially a rectangular support region extended from said each corner portion of said switch region toward the center thereof and coupled to said movable electrode means (24) on the side of said support region away from said each corner portion.

31. The optical switch of claim 21, wherein: said movable electrode means (24) has a rectangular form having sides parallel to respective sides of said switch means; and said elastic support means has four beam-like elastic support portions (23a, 23b, 23c, 23d) coupled at one end to respective corner portions of said movable electrode means (24), extended in the same direction of rotation at least one of respective sides of said movable electrode means (24) in parallel thereto and coupled at the other end to said substrate means.

32. A method for making an optical switch in which an optical path switching element (25) mounted on a movable electrode (24) is displaced to switch the optical path of an incident light beam, the method comprising the steps of:
(a) forming a first polysilicon film (2d) of either P or N conductivity type all over a conductive silicon substrate (21);
(b) forming all over said first polysilicon film (2d) a pattern containing a movable electrode portion and elastic support portions coupled thereto in space and parallel relation by a second polysilicon film (2b) of the same conductivity type as said conductivity type as said first polysilicon film (2d);
(c) etching away that surface region of said conductive silicon substrate (21) facing said movable electrode and said elastic support portions to form a low-floor portion as a fixed electrode; and
(d) forming said optical path switching element (25) on said movable electrode (24).

33. The method of claim 32, wherein the conductivity type of said first polysilicon film (2d) is opposite to that of said conductive substrate (21), and said step (b) comprises the steps of:
(b-1) forming an SiO₂ film (2a) all over said first polysilicon film (2d) and making holes (2ah) in said SiO₂ film at positions where to couple said elastic support portion to said conductive substrate, said holes extending down to said first polysilicon film (2d);
(b-2) forming said second polysilicon film (2b) all over said SiO₂ film; and
(b-3) selectively etching away said second polysilicon film (2b) to form a pattern having a plurality of through holes and containing said movable electrode portion and said elastic support portion.

34. The method of claim 33, wherein said step (c) comprises the steps of:
(c-1) forming an SiO₂ protective film (2c) over the entire areas of the surface and underside of said conductive silicon substrate (21);
(c-2) forming apertures which extend through said SiO₂ protective film (2c) and down to said first polysilicon film (2d) inside said through holes;
(c-3) etching away said first polysilicon film (2d) on that surface region of said conductive substrate (21) opposite said movable electrode portion and said elastic support portion and further etching away said surface region of said conductive substrate to a predetermined depth to form said low-floor portion (21L); and
(c-4) removing said SiO₂ protective film (2b).

35. The method of claim 32, wherein said step (b) comprises the steps of:
(b-1) forming an SiO₂ film (2d SiO₂) all over said first polysilicon film (2d);
(b-2) forming said second polysilicon film (2b) all over said SiO₂ film; and
(b-3) selectively etching away said second polysilicon film to form a pattern having a plurality of through holes and containing said movable electrode portion and said elastic support portion.

36. The method of claim 35, wherein said step (c) comprises the steps of:
(c-1) forming an SiO₂ protective film (2c) over the entire areas of the surface and underside of said conductive silicon substrate (21);
(c-2) forming apertures which extend through said SiO2 protective film and down to said first polysilicon film (2d) inside said through holes;
(c-3) etching away said first polysilicon film (2d) on that surface region of said conductive substrate opposite said movable electrode portion and said elastic support portion and further etching away said surface region of said conductive substrate to a predetermined depth to form said low-floor portion; and
(c-4) removing said SiO₂ protective film (2c).

37. The method of claim 32, 33, or 35, wherein said optical switching element (25) is a micro mirror, and said step (d) comprises the steps of:
(d-1) forming a plating seed metal land on said movable electrode portion at the position where to form said micro mirror;
(d-2) forming a resist layer over the entire surface area of said silicon substrate and exposing part of said seed metal land by making a hole of the same shape as said micro mirror in said resist layer at the position where to form said micro mirror;
(d-3) filling said hole with metal for said micro minor by plating; and
(d-4) removing said resist layer.

## Patentansprüche

1. Optischer Schalter mit einem Schaltmittel (25) zum Umschalten eines optischen Weges, das aus einem und in einen optischen Weg ausgelenkt werden kann, aufweisend:
ein leitfähiges Substratmittel (21);
einen Niederbodenabschnitt (21L), der als festes Elektrodenmittel im leitfähigen Substratmittel (21) auf einem Niveau unter dessen Oberfläche und parallel zu diesem ausgebildet ist;
ein bewegliches Elektrodenmittel (24), das gegenüber dem festen Elektrodenmittel und im Abstand zu diesem angeordnet ist und über der Oberfläche des leitfähigen Substratmittels (21) gehalten wird; und
elastische Halterungsabschnitte (22a, 22b, 23a, 23b) zum Koppeln des beweglichen Elektrodenmittels (24) und des leitfähigen Substratmittels (21) und zum elastischen Lagern des beweglichen Elektrodenmittels (24), so dass das bewegliche Elektrodenmittel (24) senkrecht zur Oberfläche des festen Elektrodenmittels ausgelenkt werden kann;
bei dem das Schaltmittel (25) zum Umschalten des optischen Weges auf der Oberfläche des beweglichen Elektrodenmittels (24) gegenüber dem festen Elektrodenmittel vorgesehen ist und eine Licht empfangende Oberfläche hat, die senkrecht auf der Oberfläche des beweglichen Elektrodenmittels (24) steht; und
bei dem das bewegliche Elektrodenmittel (24) durch EIN-AUS-Steuerung des Anlegens einer Spannung über das bewegliche Elektrodenmittel (24) und das feste Elektrodenmittel (21L) in Richtung des festen Elektrodenmittels ausgelenkt und in seine Normalstellung zurückgebracht wird, um den optischen Weg eines einfallenden Lichtstrahls durch das Schaltmittel (25) zum Umschalten des optischen Weges selektiv umzuschalten.

2. Optischer Schalter nach Anspruch 1, bei dem die elastischen Haltemittel (22a , 22b, 23a, 23b) eine Mehrzahl elastischer Halterungsabschnitte (23a, 23b) zum Koppeln einer Mehrzahl verschiedener Randabschnitte des beweglichen Elektrodenmittels (24) mit dem leitfähigen Substratmittel (21) haben.

3. Optischer Schalter nach Anspruch 1, bei dem die elastischen Haltemittel (22a , 22b, 23a, 23b) Befestigungsmittel (22a, 22b) größerer Dicke haben, die mit dem leitfähigen Substratmittel (21) gekoppelt sind, um die elastischen Haltemittel (23a, 23b) und das bewegliche Elektrodenmittel (24) über der Oberfläche des leitfähigen Substratmittels (21) zu stützen.

4. Optischer Schalter nach Anspruch 1, 2 oder 3, bei dem das bewegliche Elektrodenmittel (24) und die elastischen Haltemittel (22a, 22b, 23a, 23b) integral aus demselben Material gebildet sind.

5. Optischer Schalter nach Anspruch 4, bei dem das leitfähige Substratmittel (21) ein Siliziumsubstrat entweder des P- oder N-Leitfähigkeitstyps ist; das bewegliche Elektrodenmittel (24) und die elastischen Haltemittel (22a, 22b, 23a, 23b) integral aus einem Polysiliziumfilm des anderen Leitfähigkeitstyps gebildet sind, und ein PN-Übergang im Siliziumsubstrat unter des Oberfläche an einem Abschnitt gebildet wird, der mit den elastischen Haltemitteln gekoppelt ist.

6. Optischer Schalter nach Anspruch 5, bei dem das bewegliche Elektrodenmittel (24) eine Mehrzahl Durchgangslöcher (24h) hat.

7. Optischer Schalter nach Anspruch 1, bei dem die elastischen Haltemittel (22a, 22b, 23a, 23b) eine Isolierschicht (2a in Fig. 8H) enthalten, die mit dem leitfähigen Substratmittel (21) gekoppelt ist, um das leitfähige Substratmittel und die elastischen Haltemittel elektrisch zu isolieren.

8. Optischer Schalter nach Anspruch 1, bei dem die elastischen Haltemittel (22a, 22b, 23a, 23b) zwei elastische Halterungsabschnitte (23a, 23b) haben, die sich in entgegengesetzten Richtungen von zwei gegenüberliegenden Seiten des beweglichen Elektrodenmittels (24) aus erstrecken.

9. Optischer Schalter nach Anspruch 1, bei dem die elastischen Halterungsabschnitte (23a, 23b) jeweils die Form eines rechwinkligen Rahmens haben und im Wesentlichen an den Mittelpunkten ihrer zwei gegenüberliegenden Seiten mit dem beweglichen Elektrodenmittel (24) bzw. dem leitfähigen Substratmittel (21) gekoppelt sind.

10. Optischer Schalter nach Anspruch 1, bei dem eine im Wesentlichen rechteckige Schalterzone durch die Umhüllende des Umfangs einer Zone definiert ist, die vom beweglichen Elektrodenmittel (24) und den elastischen Haltemitteln (22a, 22b, 22c, 22d, 23a, 23b, 23c, 23d) belegt wird.

11. Optischer Schalter nach Anspruch 10, bei dem das bewegliche Elektrodenmittel (24) einen im Wesentlichen rechteckigen zentralen Elektrodenabschnitt (245) hat, der innerhalb der Schalterzone mit dieser konzentrisch angeordnet ist, wobei seine entsprechenden Seiten parallel zu denen der Schatterzone verlaufen, sowie vier im Wesentlichen rechteckige Umfangselektrodenabschnitte (241 - 244), die jeweils einen ersten Eckabschnitt haben, der einen von vier Eckabschnitten des zentralen Elektrodenabschnitts (245) überlappt, und einen zweiten Eckabschnitt, der dem ersten Eckabschnitt diagonal gegenüberliegt; und bei dem die elastischen Haltemittel vier elastische Halterungsabschnitte (23a, 23b, 23c, 23d) haben, die sich jeweils in Zick-Zack-Form über die gesamte Fläche einer rechteckigen Zone erstrecken, die zwischen den ihnen benachbarten Umfangselektrodenabschnitten (241 - 244) definiert ist, und an einem Ende mit dem zentralen Elektrodenabschnitt und am anderen Ende mit dem leitfähigen Substratmittel (21) an einer Randkante der Schalterzone gekoppelt sind.

12. Optischer Schalter nach Anspruch 10, bei dem die elastischen Haltemittel (22a, 22b, 22c, 22d, 23a, 23b, 23c, 23d) zwei elastische Halterungsabschnitte (23a, 23b) enthalten, die sich jeweils in Zick-Zack-Form über die gesamte Fläche einer von zwei im Wesentlichen rechteckigen Zonen (32a, 32b) gleicher Größe von zwei gegenüberliegenden Seiten der Schalterzone aus auf einander zu erstrecken und an einem Ende mit dem beweglichen Elektrodenmittel (24) und am anderen Ende mit dem leitfähigen Substratmittel (21) gekoppelt sind.

13. Optischer Schalter nach Anspruch 12, bei dem das bewegliche Elektrodenmittel (24) ein Rechteck ist, das eine von zwei Zonen belegt, die von der Schalterzone entlang einer Geraden parallel zu einer ihrer Seiten abgeteilt sind; wobei die zwei rechteckigen Zonen (32a, 32b) so definiert sind, dass sie die andere Zone belegen und sich entlang derselben Seite der rechteckigen Zone erstrecken; und bei dem das eine Ende jedes der beiden elastischen Halterungsabschnitte am selben Punkt mit dem beweglichen Elektrodenmittel (24 gekoppelt ist.

14. Optischer Schalter nach Anspruch 10, bei dem das bewegliche Elektrodenmittel (24) ein Rechteck ist, das eine zentrale Zone von drei Zonen belegt, die von der Schalterzone entlang zweier Geraden parallel zu einer ihrer Seiten abgeteilt ist; und die elastischen Haltemittel (23a, 23b) in Zick-Zack-Form über die gesamte Fläche der rechteckigen Zone an jeder Seite des beweglichen Elektrodenmittels (24) verlaufen.

15. Optischer Schalter nach Anspruch 14, bei dem ein Ende der elastischen Haltemittel (23a, 23b) mit dem leitfähigen Substratmittel (21) an einer der kürzeren Seiten der rechteckigen Zone gekoppelt ist und das andere Ende jedes der elastischen Halterungsabschnitte von der anderen kürzeren Seite im rechten Winkel zu der einen Seite der Schalterregion geführt und mit dem beweglichen Elektrodenmittel (24) an seiner kürzeren Seite gekoppelt ist.

16. Optischer Schalter nach Anspruch 14, bei dem die herausgeführten elastischen Haltemittel (23a, 23b) an einem Ende mit dem leitfähigen Substratmittel (21) an einer der kürzeren Seiten des Rechtecks und am anderen Ende an zwei Eckabschnitten des beweglichen Elektrodenmittels (24) an der anderen kürzeren Seite des gekoppelt sind.

17. Optischer Schalter nach Anspruch 14, bei dem die herausgeführten elastischen Haltemittel (23a, 23b, 23c, 23d) an beiden Enden mit dem leitfähigen Substratmittel (21) an den beiden kürzeren Seiten des Rechtecks und mit dem beweglichen Elektrodenmittel (24) an der längeren Seite im Wesentlichen in deren Mittelpunkt gekoppelt sind.

18. Optischer Schalter nach Anspruch 10, bei dem die Schalterzone (40) im Wesentlichen quadratisch ist; das bewegliche Elektrodenmittel (24) eine im Wesentlichen quadratische Form hat, wobei die Scheiteilpunkte in den Mittelpunkten der jeweiligen Seiten der Schalterzone (40) liegen; die elastischen Haltemittel (23a, 23b, 23c, 23d) an einem Ende mit jeder Seite des beweglichen Elektrodenmittels (24) gekoppelt sind, sich in Zick-Zack-Form über die gesamte Fläche jeder von vier dreieckigen Zonen außerhalb des beweglichen Elektrodenmittels (24) in der Schalterzone (40) erstrecken und mit dem leitfähigen Substratmittel (21) an dem Eckabschnitt der vier Eckabschnitte der Schalterzone gekoppelt sind, der gegenüber der jeweiligen dieser Seiten liegt.

19. Optischer Schalter nach Anspruch 10, bei dem die Schalterzone (40) im Wesentlichen quadratisch ist; die elastischen Haltemittel (23a, 23b, 23c, 23d) an jedem Eckabschnitt der Schalterzone mit dem leitfähigen Substratmittel (21) gekoppelt sind, sich in Zick-Zack-Form über die gesamte Fläche einer im Wesentlichen rechteckigen Lagerungszone (32a, 32b, 32c, 32) erstrecken, die sich von jedem Eckabschnitt der Schalterzone zu deren Mittelpunkt hin erstreckt und mit dem beweglichen Elektrodenmittel (24) an der Seite der Lagerungszone, die von dem jeweiligen Eckabschnitt abgewandt ist, gekoppelt sind.

20. Optischer Schalter nach Anspruch 10, bei dem das bewegliche Elektrodenmittel (24) eine rechteckige Form mit Seiten hat, die parallel zu entsprechenden Seiten des Schaltermittels sind; und die elastischen Haltemittel (23a, 23b, 23c, 23d) vier elastische Halterungsabschnitte in der Art einseitig eingespannter Arme haben, die an einem Ende mit entsprechenden Eckabschnitten des beweglichen Elektrodenmittels gekoppelt sind, in derselben Drehrichtung mindestens einer der entsprechenden Seiten des beweglichen Elektrodenmittels parallel zu dieser herausgeführt und am anderen Ende mit dem leitfähigen Substratmittel (21) gekoppelt sind.

21. Optischer Schalter mit einem Schaltmittel (25) zum Umschalten eines optischen Weges, das aus einem und in einen optischen Weg ausgelenkt werden kann, aufweisend:
ein Substratmittel (21A) mit einer Öffnung (21a);
ein festes Elektrodenmittel (21B), das am Substratmittels angebracht ist, um die Öffnung (21a) zu schließen, wobei die Oberfläche des festen Elektrodenmittels auf einem niedrigeren Niveau liegt als die dazu parallele Oberfläche des Substratmittels (21A);
ein bewegliches Elektrodenmittel (24), das gegenüber dem festen Elektrodenmittel (21B) und im Abstand zu diesem angeordnet ist und über der Oberfläche des Substratmittels (21A) gehalten wird; und
elastische Haltemittel (22a , 22b, 22c, 22d, 23a, 23b, 23c, 23d) zum Koppeln des beweglichen Elektrodenmittels (24) und des Substratmittels (21A) und zum elastischen Lagern des beweglichen Elektrodenmittels (24), so dass das bewegliche Elektrodenmittel (24) senkrecht zur Oberfläche des festen Elektrodenmittels (21B) ausgelenkt werden kann;
bei dem das Schaltmittel (25) zum Umschalten des optischen Weges auf der Oberfläche des beweglichen Elektrodenmittels (24) gegenüber dem festen Elektrodenmittel (21 B) vorgesehen ist und eine Licht empfangende Oberfläche hat, die senkrecht auf der Oberfläche des beweglichen Elektrodenmittels (24) steht; und
bei dem eine Schalterzone, die von der Umhüllenden des Umfangs einer vom beweglichen Elektrodenmittel (24) und von den elastischen Haltemitteln eingenommenen Zone definiert wird, und durch EIN-AUS-Steuerung des Anlegens einer Spannung über das bewegliche Elektrodenmittel (24) und das feste Elektrodenmittel (21B) das bewegliche Elektrodenmittel in Richtung des festen Elektrodenmittels ausgelenkt und in seine Normalstellung zurückgebracht wird, um den optischen Weg eines einfallenden Lichtstrahls durch das Schaltmittel (25) zum Umschalten des optischen Weges selektiv umzuschalten.

22. Optischer Schalter nach Anspruch 21, bei dem das bewegliche Elektrodenmittel (24) einen im Wesentlichen rechteckigen zentralen Elektrodenabschnitt (245) hat, der innerhalb der Schalterzone zu dieser konzentrisch angeordnet ist, wobei seine entsprechenden Seiten parallel zu denen der Schalterzone verlaufen, sowie vier im Wesentlichen rechteckige Umfangselektrodenabschnitte (241 - 244), die jeweils einen ersten Eckabschnitt haben, der einen von vier Eckabschnitten des zentralen Elektrodenabschnitts (245) überlappt, und einen zweiten Eckabschnitt, der dem ersten Eckabschnitt diagonal gegenüberliegt; und bei dem die elastischen Haltemittel vier elastische Halterungsabschnitte (23a, 23b, 23c, 23d) haben, die sich jeweils in Zick-Zack-Form über die gesamte Fläche einer rechteckigen Zone erstrecken, die zwischen den ihnen benachbarten Umfangselektrodenabschnitten definiert ist, und an einem Ende mit dem zentralen Elektrodenabschnitt (245) und am anderen Ende mit dem Substratmittel (21A) an einer Randkante der Schalterzone gekoppelt sind.

23. Optischer Schalter nach Anspruch 21, bei dem die elastischen Haltemittel zwei elastische Halterungsabschnitte (23a, 23b) enthalten, die sich jeweils ein Zick-Zack-Form über die gesamte Fläche einer von zwei im Wesentlichen rechteckigen Zonen (32a, 32b) gleicher Größe von zwei gegenüberliegenden Seiten der Schalterzone aus auf einander zu erstrecken und an einem Ende mit dem beweglichen Elektrodenmittel (24) und am anderen Ende mit dem Substratmittel gekoppelt sind.

24. Optischer Schalter nach Anspruch 23, bei dem das bewegliche Elektrodenmittel (24) ein Rechteck ist, das eine von zwei Zonen belegt, die von der Schalterzone entlang einer Geraden parallel zu einer ihrer Seiten abgeteilt sind; wobei die zwei rechteckigen Zonen (32a, 32b) so definiert sind, dass sie die andere Zone zu belegen und sich entlang derselben Seite der rechteckigen Zone erstrecken; und bei dem das eine Ende jedes der beiden elastischen Halterungsabschnitte (23a, 23b) am selben Punkt mit dem beweglichen Elektrodenmittel (24 gekoppelt ist.

25. Optischer Schalter nach Anspruch 21, bei dem das bewegliche Elektrodenmittel (24) ein Rechteck ist, das eine zentrale Zone von drei Zonen belegt, die von der Schalterzone entlang zweier Geraden parallel zu einer ihrer Seiten abgeteilt sind; und die elastischen Haltemittel (23a, 23b) in Zick-Zack-Form über die gesamte Fläche der rechteckigen Zone an jeder Seite des beweglichen Elektrodenmittels (24) verlaufen.

26. Optischer Schalter nach Anspruch 25, bei dem ein Ende der elastischen Haltemittel (23a, 23b) mit dem Substratmittel (21A) an einer der kürzeren Seiten der rechteckigen Zone gekoppelt ist und das andere Ende jedes der elastischen Halterungsabschnitte von der anderen kürzeren Seite im rechten Winkel zu der einen Seite der Schalterregion geführt und mit dem beweglichen Elektrodenmittel (24) an seiner kürzeren Seite gekoppelt ist.

27. Optischer Schalter nach Anspruch 25, bei dem die herausgeführten elastischen Haltemittel (23a, 23b) an einem Ende mit dem Substratmittel an einer der kürzeren Seiten des Rechtecks und am anderen Ende an zwei Eckabschnitten des beweglichen Elektrodenmittels (24) an der anderen kürzeren Seite des Rechtecks gekoppelt sind.

28. Optischer Schalter nach Anspruch 25, bei dem die herausgeführten elastischen Haltemittel (22a, 22b, 22c, 22d, 23a, 23b, 23c, 23d) an beiden Enden mit dem Substratmittel an den beiden kürzeren Seiten des Rechtecks und mit dem beweglichen Elektrodenmittel (24) an der längeren Seite im Wesentlichen in deren Mittelpunkt gekoppelt sind.

29. Optischer Schalter nach Anspruch 21, bei dem die Schalterzone im Wesentlichen quadratisch ist; das bewegliche Elektrodenmittel (24) eine im Wesentlichen quadratische Form hat, wobei die Scheitelpunkte in den Mittelpunkten der jeweiligen Seiten der Schalterzone liegen; und bei dem die elastischen Haltemittel (22a, 22b, 22c, 22d, 23a, 23b, 23c, 23d) an einem Ende mit jeder Seite des beweglichen Elektrodenmittels (24) gekoppelt sind, sich in Zick-Zack-Form über die gesamte Fläche jeder von vier dreieckigen Zonen außerhalb des beweglichen Elektrodenmittels (24) in der Schalterzone erstrecken und mit dem Substratmittel an dem Eckabschnitt der vier Eckabschnitte der Schalterzone gekoppelt sind, der gegenüber der jeweiligen dieser Seiten liegt.

30. Optischer Schalter nach Anspruch 21, bei dem die Schalterzone im Wesentlichen quadratisch ist; die elastischen Haltemittel (22a, 22b, 22c, 22d, 23a, 23b, 23c, 23d) an jedem Eckabschnitt der Schalterzone mit dem Substratmittel gekoppelt sind, sich in Zick-Zack-Form über die gesamte Fläche einer im Wesentlichen rechteckigen Lagerungszone erstrecken, die sich von jedem Eckabschnitt der Schalterzone zu deren Mittelpunkt hin erstreckt und mit dem beweglichen Elektrodenmittel (24) an der Seite der Lagerungszone, die von dem jeweiligen Eckabschnitt abgewandt ist, gekoppelt sind.

31. Optischer Schalter nach Anspruch 21, bei dem das bewegliche Elektrodenmittel (24) eine rechteckige Form mit Seiten hat, die parallel zu entsprechenden Seiten des Schaltermittels sind; und die elastischen Haltemittel vier elastische Halterungsabschnitte (23a, 23b, 23c, 23d) in der Art einseitig eingespannter Arme haben, die an einem Ende mit entsprechenden Eckabschnitten des beweglichen Elektrodenmittels (24) gekoppelt sind, in derselben Drehrichtung mindestens einer der entsprechenden Seiten des beweglichen Elektrodenmittels (24) parallel zu dieser herausgeführt und am anderen Ende mit dem leitfähigen Substratmittel gekoppelt sind.

32. Verfahren zum Herstellen eines optischen Schalters, bei dem ein auf einer beweglichen Elektrode (24) angebrachtes Element (25) zum Umschalten eines optischen Weges ausgelenkt wird, um den optischen Weg eines einfallenden Lichtstrahls umzuschalten, wobei das Verfahren die Schritte aufweist:
(a) Ausbilden eines ersten Polysiliziumfilms (2d) entweder des P- oder N-Leitfähigkeitstyps überall auf einem leitfähigen Siliziumsubstrat (21);
(b) Ausbilden eines Musters überall auf dem ersten Polysiliziumfilm (2d), das einen beweglichen Elektrodenabschnitt und damit gekoppelte elastische Halterungsabschnitte enthält, Abstand zu und parallel mittels eines zweiten Polysiliziumfilms (2b) mit dem gleichen Leitfähigkeitstyp wie der erste Polysiliziumfilm (2d);
(c) Wegätzen derjenigen Oberflächenzone des leitfähigen Siliziumsubstrats (21), die zur beweglichen Elektrode und den elastischen Halterungsabschnitten weist, um einen Niederbodenabschnitt als feste Elektrode auszuformen; und
(d) Ausbilden des Elements (25) zum Umschalten des optischen Weges auf der beweglichen Elektrode (24).

33. Verfahren nach Anspruch 32, bei dem der Leitfähigkeitstyp des ersten Polysiliziumfilms (2d) dem des leitfähigen Substrats (21) entgegengesetzt ist und der Schritt (b) die Schritte aufweist:
(b-1) Ausbilden eines SiO₂-Films (2a) überall auf dem ersten Polysiliziumfilm (2d) und Ausbilden von Löchern (2ah) im SiO₂-Film an den Stellen, wo der elastische Halterungsabschnitt mit dem leitfähigen Substrat zu koppeln ist, wobei sich die Löcher bis hinunter zum ersten Polysiliziumfilm (2d) erstrecken;
(b-2) Ausbilden eines zweiten Polysiliziumfilms (2b) überall auf dem SiO₂-Film; und
(b-3) selektives Ätzen des zweiten Polysiliziumfilms (2b), um ein Muster mit einer Mehrzahl Durchganglöcher auszubilden, die den beweglichen Elektrodenabschnitt und den elastischen Halterungsabschnitt enthält.

34. Verfahren nach Anspruch 33, bei dem der Schritt (c) die Schritte aufweist:
(c-1) Ausbilden eines SiO₂-Schutzfilms (2c) auf den gesamten Flächen der Oberfläche und Unterseite des leitfähigen Siliziumsubstrats (21);
(c-2) Ausbilden von Öffnungen, die sich durch den SiO₂-Schutzfilm (2c) und hinunter zum ersten Polysiliziumfilm (2d) in den Durchgangslöchern erstrecken;
(c-3) Wegätzen des ersten Polysiliziumfilms (2d) von der Oberflächenzone des leitfähigen Substrats (21) gegenüber dem beweglichen Elektrodenabschnitt und dem elastischen Halterungsabschnitt und ferner Wegätzen der Oberflächenzone des leitfähigen Substrats auf eine vorgegebene Tiefe, um den Niederbodenabschnitt (21L) auszubilden; und
(c-4) Entfernen des SiO₂-Schutzfilms (2c).

35. Verfahren nach Anspruch 32, bei dem der Schritt (b) die Schritte aufweist:
(b-1) Ausbilden eines SiO₂-Films (2d SiO₂) überall auf dem ersten Polysiliziumfilm (2d);
(b-2) Ausbilden des zweiten Polysiliziumfilms (2b) überall auf dem SiO₂-Film; und
(b-3) selektives Ätzen des zweiten Polysiliziumfilms, um ein Muster mit einer Mehrzahl Durchganglöcher auszubilden, die den beweglichen Elektrodenabschnitt und den elastischen Halterungsabschnitt enthält.

36. Verfahren nach Anspruch 35, bei dem der Schritt (c) die Schritte aufweist:
(c-1) Ausbilden eines SiO₂-Schutzfilms (2c) über den gesamten Flächen der Oberfläche und Unterseite des leitfähigen Siliziumsubstrats (21);
(c-2) Ausbilden von Öffnungen, die sich durch den SiO₂-Schutzfilm und hinunter zum ersten Polysitiziumfilm (2d) in den Durchgangslöchern erstrecken;
(c-3) Wegätzen des ersten Polysiliziumfilms (2d) an der Oberflächenzone des leitfähigen Substrats gegenüber dem beweglichen Elektrodenabschnitt und dem elastischen Halterungsabschnitt und ferner Wegätzen der Oberflächenzone des leitfähigen Substrats auf eine vorgegebene Tiefe, um den Niederbodenabschnitt auszubilden; und
(c-4) Entfernen des SiO₂-Schutzfilms (2c).

37. Verfahren nach Anspruch 32, 33 oder 35, bei dem das optische Schaltelement (25) ein Mikrospiegel ist und der Schritt (d) die Schritte aufweist:
(d-1) Ausbilden eines Metallstegs als Kern für eine galvanische Beschichtung auf dem beweglichen Elektrodenabschnitt an der Position, wo der Mikrospiegel auszubilden ist;
(d-2) Ausbilden einer Resist-Schicht über dem gesamten Oberflächenbereich des Siliziumsubstrats und Freilegen eines Teils des Kern-Metallstegs, indem ein Loch mit der gleichen Form wie der Mikrospiegel in der Resist-Schicht an der Position ausgebildet wird, wo der Mikrospiegel auszuformen ist;
(d-3) Füllen des Lochs mit Metall für den Mikrospiegel durch galvanische Beschichtung; und
(d-4) Entfernen der Resist-Schicht.

## Revendications

1. Commutateur optique comportant un moyen (25) de commutation de trajet optique qui peut se décaler en interrompant et en rétablissant un trajet optique, comprenant :
un moyen (21) formant substrat conducteur ;
une partie (21L) de base inférieure formée, en tant que moyen formant électrode fixe, dans ledit moyen (21) formant substrat conducteur à un niveau plus bas que sa surface et parallèlement à celle-ci ;
un moyen (24) formant électrode mobile disposé opposé audit moyen formant électrode fixe dans une relation espacée de celui-ci et maintenu au-dessus de la surface dudit moyen (21) formant substrat conducteur ; et
un moyen (22a, 22b, 23a, 23b) de support élastique servant à coupler ledit moyen (24) formant électrode mobile et ledit moyen (21) formant substrat conducteur et à supporter élastiquement ledit moyen (24) formant électrode mobile de sorte que ledit moyen (24) formant électrode mobile peut se décaler verticalement par rapport à la surface dudit moyen formant électrode fixe ;
dans lequel ledit moyen (25) de commutation de trajet optique est disposé sur la surface dudit moyen (24) formant électrode mobile opposé audit moyen formant électrode fixe, et comporte une surface de réception de lumière verticale par rapport à la surface dudit moyen (24) formant électrode mobile ; et
dans lequel, par une commande d'activation et de désactivation (ON-OFF) d'application de tension aux bornes dudit moyen (24) formant électrode mobile et dudit moyen (21L) formant électrode fixe, ledit moyen (24) formant électrode mobile se décale vers ledit moyen formant électrode fixe et revient dans sa position normale pour que ledit moyen (25) de commutation de trajet optique commute sélectivement le trajet optique d'un faisceau de lumière incident.

2. Commutateur optique selon la revendication 1, dans lequel ledit moyen (22a, 22b, 23a, 23b) de support élastique comporte une pluralité de parties (23a, 23b) de support élastique servant à coupler une pluralité de parties marginales différentes dudit moyen (24) formant électrode mobile audit moyen (21) formant substrat conducteur.

3. Commutateur optique selon la revendication 1, dans lequel ledit moyen (22a, 22b, 23a, 23b) de support élastique comporte un moyen (22a, 22b) de fixation ayant une épaisseur augmentée, couplé audit moyen (21) formant substrat conducteur, servant à supporter ledit moyen (23a, 23b) de support élastique et ledit moyen (24) formant électrode mobile au-dessus de la surface dudit moyen (21) formant substrat conducteur.

4. Commutateur optique selon la revendication 1, 2 ou 3, dans lequel ledit moyen (24) formant électrode mobile et ledit moyen (22a, 22b, 23a, 23b) de support élastique sont formés d'une seule pièce à partir du même matériau.

5. Commutateur optique selon la revendication 4, dans lequel : ledit moyen (21) formant substrat conducteur est un substrat en silicium de conductivité de type soit P soit N ; ledit moyen (24) formant électrode mobile et ledit moyen (22a, 22b, 23a, 23b) de support élastique sont formés d'un seul tenant par un film de polysilicium ayant un autre type de conductivité ; et une jonction PN est formée dans ledit substrat en silicium au-dessous de sa surface au niveau d'une partie couplée audit moyen de support élastique.

6. Commutateur optique selon la revendication 5, dans lequel ledit moyen (24) formant électrode mobile comporte une pluralité de trous traversants (24h).

7. Commutateur optique selon la revendication 1, dans lequel ledit moyen (22a, 22b, 23a, 23b) de support élastique comprend une couche isolante (2a à la figure 8H) couplée audit moyen (21) formant substrat conducteur, destinée à isoler électriquement ledit moyen (21) formant substrat conducteur et ledit moyen de support élastique.

8. Commutateur optique selon la revendication 1, dans lequel ledit moyen (22a, 22b, 23a, 23b) de support élastique comporte deux parties (23a, 23b) de support élastique s'étendant dans des directions opposées depuis deux côtés opposés dudit moyen (24) formant électrode mobile.

9. Commutateur optique selon la revendication 8, dans lequel lesdites deux parties (23a, 23b) de support élastique ont chacune la forme d'un cadre rectangulaire et sont couplées, respectivement, sensiblement au niveau des centres de leurs deux côtés opposés, audit moyen (24) formant électrode mobile et audit moyen (21) formant substrat conducteur.

10. Commutateur optique selon la revendication 1, dans lequel une région de commutation sensiblement rectangulaire est définie par l'enveloppe de la périphérie d'une région occupée par ledit moyen (24) formant électrode mobile et ledit moyen (22a, 22b, 22c, 22d, 23a, 23b, 23c, 23d) de support élastique.

11. Commutateur optique selon la revendication 10, dans lequel : ledit moyen (24) formant électrode mobile comporte une partie centrale sensiblement rectangulaire (245) d'électrode disposée à l'intérieur de ladite région de commutation, concentriquement à celle-ci, ses côtés respectifs s'étendant parallèlement à ceux de ladite région de commutation, et quatre parties périphériques sensiblement rectangulaires (241 à 244) d'électrode comportant chacune une première partie de coin chevauchant l'une de quatre parties de coins de ladite partie centrale (245) d'électrode, et une seconde partie de coin diagonalement opposée à ladite première partie de coin ; et ledit moyen de support élastique comporte quatre parties (23a, 23b, 23c, 23d) de support élastique s'étendant chacune en suivant une forme de zigzag de part et d'autre de toute la superficie d'une région rectangulaire définie entre lesdites parties périphériques (241 à 244) d'électrode qui lui sont adjacentes et couplées, à une extrémité, à ladite partie centrale d'électrode et, à l'autre extrémité, audit moyen (21) formant substrat conducteur au niveau d'un bord marginal de ladite région de commutation.

12. Commutateur optique selon la revendication 10, dans lequel ledit moyen (22a, 22b, 22c, 22d, 23a, 23b, 23c, 23d) de support élastique comprend deux parties (23a, 23b) de support élastique s'étendant chacune en suivant une forme de zigzag de part et d'autre de toute la superficie de l'une de deux régions sensiblement rectangulaires de la même taille (32a, 32b) qui s'étendent l'une vers l'autre depuis deux côtés opposés de ladite région de commutation et couplées, à une extrémité, audit moyen (24) formant électrode mobile et, à l'autre extrémité, audit moyen (21) formant substrat conducteur.

13. Commutateur optique selon la revendication 12, dans lequel : ledit moyen (24) formant électrode mobile est un rectangle occupant l'une de deux régions divisées de ladite région de commutation le long d'une ligne droite parallèle à l'un de ses côtés ; lesdites deux régions rectangulaires (32a, 32b) sont définies pour occuper l'autre région et s'étendre le long du même côté de ladite région rectangulaire ; et ladite une extrémité de chacune desdites deux parties de support élastique est couplée audit moyen (24) formant électrode mobile au niveau du même point.

14. Commutateur optique selon la revendication 10, dans lequel : ledit moyen (24) formant électrode mobile est un rectangle occupant une région centrale de trois régions divisées de ladite région de commutation le long de deux lignes droites parallèles à l'un de ses côtés ; et ledit moyen (23a, 23b) de support élastique s'étend en suivant une forme de zigzag de part et d'autre de toute la superficie de ladite région rectangulaire, au niveau d'un côté ou de l'autre dudit moyen (24) formant électrode mobile.

15. Commutateur optique selon la revendication 14, dans lequel une extrémité dudit moyen (23a, 23b) de support élastique est couplée audit moyen (21) formant substrat conducteur, sur l'un de côtés plus courts de ladite région rectangulaire, et l'autre extrémité de chaque dite partie de support élastique s'étend depuis l'autre côté plus court le long d'un côté, à angles droits par rapport à un côté de ladite région de commutation, et est couplée audit moyen (24) formant électrode mobile sur son côté plus court.

16. Commutateur optique selon la revendication 14, dans lequel ledit moyen (23a, 23b) de support élastique étendu est couplé, à une extrémité, audit moyen (21) formant substrat conducteur au niveau de l'un de côtés plus courts dudit rectangle et, à l'autre extrémité, à deux parties de coins dudit moyen (24) formant électrode mobile sur l'autre côté plus court.

17. Commutateur optique selon la revendication 14, dans lequel ledit moyen (23a, 23b, 23c, 23d) de support élastique est couplé, aux deux extrémités, audit moyen (21) formant substrat conducteur sur les deux côtés plus courts dudit rectangle, et est couplé audit moyen (24) formant électrode mobile sur le côté plus long dudit rectangle, sensiblement au niveau de son centre.

18. Commutateur optique selon la revendication 10, dans lequel : ladite région (40) de commutation est sensiblement carrée ; ledit moyen (24) formant électrode mobile a une forme sensiblement carrée dont les sommets se trouvent au niveau des centres de côtés respectifs de ladite région (40) de commutation ; ledit moyen (23a, 23b, 23c, 23d) de support élastique est couplé, à une extrémité, à chaque côté dudit moyen (24) formant électrode mobile, en s'étendant en suivant une forme de zigzag de part et d'autre de toute la superficie de chacune de quatre régions triangulaires à l'extérieur dudit moyen (24) formant électrode mobile dans ladite région (40) de commutation, et est couplé audit moyen (21) formant substrat conducteur au niveau de la partie des quatre parties de coins de ladite région de commutation qui est opposée à chaque dit côté.

19. Commutateur optique selon la revendication 10, dans lequel : ladite région de commutation est sensiblement carrée ; ledit moyen (23a, 23b, 23c, 23d) de support élastique est couplé audit moyen (21) formant substrat conducteur au niveau de chaque partie de coin de ladite région de commutation, en s'étendant suivant une forme de zigzag de part et d'autre de toute la superficie d'une région sensiblement rectangulaire (32a, 32b, 32c, 32d) de support qui s'étend de chaque dite partie de coin de ladite région de commutation en direction de son centre, et est couplé audit moyen (24) formant électrode mobile sur le côté de ladite région de support qui est éloigné de chaque dite partie de coin.

20. Commutateur optique selon la revendication 10, dans lequel : ledit moyen (24) formant électrode mobile a une forme rectangulaire comportant des côtés parallèles aux côtés respectifs dudit moyen de commutation ; et ledit moyen (23a, 23b, 23c, 23d) de support élastique comporte quatre parties de support élastique de type barrette couplées, à une extrémité, aux parties de coins respectives dudit moyen formant électrode mobile, s'étendant dans le même sens de rotation qu'au moins l'un de côtés respectifs dudit moyen formant électrode mobile, parallèlement à celui-ci, et couplées, à l'autre extrémité, audit moyen (21) formant substrat conducteur.

21. Commutateur optique comportant un moyen (25) de commutation de trajet optique qui peut se décaler en interrompant et en rétablissant un trajet optique, comprenant :
un moyen (21A) formant substrat comportant une ouverture (21a) ;
un moyen (21B) formant électrode fixe assujetti audit moyen formant substrat pour fermer ladite ouverture (21a), ledit moyen formant électrode fixe comportant une surface à un niveau inférieur à une surface dudit moyen (21A) formant substrat, parallèle à celle-ci ;
un moyen (24) formant électrode mobile disposé opposé audit moyen (21B) formant électrode fixe dans une relation espacée de celui-ci et maintenu au-dessus de la surface dudit moyen (21A) formant substrat ; et
un moyen (22a, 22b, 22c, 22d, 23a, 23b, 23c, 23d) de support élastique servant à coupler ledit moyen (24) formant électrode mobile et ledit moyen (21A) formant substrat et à supporter élastiquement ledit moyen (24) formant électrode mobile de sorte que ledit moyen (24) formant électrode mobile peut se décaler verticalement par rapport à la surface dudit moyen (21B) formant électrode fixe ;
dans lequel ledit moyen (25) de commutation de trajet optique est disposé sur la surface dudit moyen (24) formant électrode mobile opposé audit moyen (21B) formant électrode fixe et comporte une surface de réception de lumière verticale par rapport à la surface dudit moyen (24) formant électrode mobile ; et
dans lequel une région de commutation définie par l'enveloppe de la périphérie d'une région occupée par ledit moyen (24) formant électrode mobile et ledit moyen de support élastique est sensiblement rectangulaire, et par une commande d'activation et de désactivation (ON-OFF) d'application de tension aux bornes dudit moyen (24) formant électrode mobile et dudit moyen (21B) formant électrode fixe, ledit moyen formant électrode mobile se décale en direction dudit moyen formant électrode fixe et revient dans sa position normale pour que ledit moyen (25) de commutation de trajet optique commute sélectivement le trajet optique d'un faisceau de lumière incident.

22. Commutateur optique selon la revendication 21, dans lequel : ledit moyen (24) formant électrode mobile comporte une partie centrale sensiblement rectangulaire (245) d'électrode disposée à l'intérieur de ladite région de commutation, concentriquement à celle-ci, ses côtés respectifs s'étendant parallèlement à ceux de ladite région de commutation, et quatre parties périphériques sensiblement rectangulaires (241 à 244) d'électrode comportant chacune une première partie de coin chevauchant l'une de quatre parties de coins de ladite partie centrale (245) d'électrode et une seconde partie de coin diagonalement opposée à ladite première partie de coin ; et ledit moyen de support élastique comporte quatre parties (23a, 23b, 23c, 23d) de support élastique s'étendant chacune en suivant une forme de zigzag de part et d'autre de toute la superficie d'une région rectangulaire définie entre lesdites parties périphériques d'électrode qui lui sont adjacentes et couplées, à une extrémité, à ladite partie centrale (245) d'électrode et, à l'autre extrémité, audit moyen (21A) formant substrat au niveau d'un bord marginal de ladite région de commutation.

23. Commutateur optique selon la revendication 21, dans lequel ledit moyen de support élastique comprend deux parties (23a, 23b) de support élastique s'étendant chacune en suivant une forme de zigzag de part et d'autre de toute la superficie de l'une de deux régions sensiblement rectangulaires (32a, 32b) de la même taille qui s'étendent l'une vers l'autre depuis deux côtés opposés de ladite région de commutation et couplées, à une extrémité, audit moyen (24) formant électrode mobile et, à l'autre extrémité, audit moyen formant substrat.

24. Commutateur optique selon la revendication 23, dans lequel : ledit moyen (24) formant électrode mobile est un rectangle occupant l'une de deux régions divisées de ladite région de commutation le long d'une ligne droite parallèle à l'un de ses côtés ; lesdites deux régions rectangulaires (32a, 32b) sont définies pour occuper l'autre région et s'étendre le long du même côté de ladite région rectangulaire ; et ladite une extrémité de chacune desdites deux parties (23a, 23b) de support élastique est couplée audit moyen (24) formant électrode mobile au niveau du même point.

25. Commutateur optique selon la revendication 21, dans lequel : ledit moyen (24) formant électrode mobile est un rectangle occupant une région centrale de trois régions divisées de ladite région de commutation le long de deux lignes droites parallèles à l'un de ses côtés ; et ledit moyen (23a, 23b) de support élastique s'étend en suivant une forme de zigzag de part et d'autre de toute la superficie de ladite région rectangulaire, au niveau d'un côté ou de l'autre dudit moyen (24) formant électrode mobile.

26. Commutateur optique selon la revendication 25, dans lequel une extrémité dudit moyen (23a, 23b) de support élastique est couplée audit moyen (21A) formant substrat sur l'un de côtés plus courts de ladite région rectangulaire et l'autre extrémité de chaque dite partie de support élastique s'étend depuis l'autre côté plus court le long d'un côté à angles droits par rapport audit un côté de ladite région de commutation, et est couplée audit moyen (24) formant électrode mobile sur son côté plus court.

27. Commutateur optique selon la revendication 25, dans lequel ledit moyen (23a, 23b) de support élastique étendu est couplé, à une extrémité, audit moyen formant substrat sur l'un de côtés plus courts dudit rectangle et, au niveau de l'autre extrémité, à deux parties de coins dudit moyen (24) formant électrode mobile sur l'autre côté plus court.

28. Commutateur optique selon la revendication 25, dans lequel ledit moyen (22a, 22b, 22c, 22d, 23a, 23b, 23c, 23d) de support élastique étendu est couplé, aux deux extrémités, audit moyen formant substrat sur les deux côtés plus courts dudit rectangle, et est couplé audit moyen (24) formant électrode mobile sur le côté plus long dudit rectangle, sensiblement au niveau de son centre.

29. Commutateur optique selon la revendication 21, dans lequel : ladite région de commutation est sensiblement carrée ; ledit moyen (24) formant électrode mobile a une forme sensiblement carrée, ses sommets se trouvant au niveau des centres des côtés respectifs de ladite région de commutation ; ledit moyen (22a, 22b, 22c, 22d, 23a, 23b, 23c, 23d) de support élastique est couplé, à une extrémité, à chaque côté dudit moyen (24) formant électrode mobile, en s'étendant en suivant une forme de zigzag de part et d'autre de toute la superficie de chacune de quatre régions triangulaires à l'extérieur dudit moyen (24) formant électrode mobile dans ladite région de commutation, et est couplé audit moyen formant substrat au niveau de la partie de quatre parties de coins de ladite région de commutation qui est opposée à chaque dit côté.

30. Commutateur optique selon la revendication 21, dans lequel : ladite région de commutation est sensiblement carrée ; ledit moyen (22a, 22b, 22c, 22d, 23a, 23b, 23c, 23d) de support élastique est couplé audit moyen formant substrat au niveau de chaque partie de coin de ladite région de commutation, en s'étendant en suivant une forme de zigzag de part et d'autre de toute la superficie d'une région de support sensiblement rectangulaire qui s'étend de chaque dite partie de coin de ladite région de commutation en direction de son centre, et est couplé audit moyen (24) formant électrode mobile sur le côté de ladite région de support éloigné de chaque dite région de coin.

31. Commutateur optique selon la revendication 21, dans lequel : ledit moyen (24) formant électrode mobile a une forme rectangulaire comportant des côtés parallèles aux côtés respectifs dudit moyen de commutation ; et ledit moyen de support élastique comporte quatre parties (23a, 23b, 23c, 23d) de support élastique de type barrette couplées, à une extrémité, aux parties de coins respectives dudit moyen (24) formant électrode mobile, en s'étendant dans le même sens de rotation qu'au moins l'un de côtés respectifs dudit moyen (24) formant électrode mobile, parallèlement à celui-ci, et couplées, à l'autre extrémité, audit moyen formant substrat.

32. Procédé de fabrication d'un commutateur optique dans lequel un élément (25) de commutation de trajet optique monté sur une électrode mobile (24) se décale pour commuter le trajet optique d'un faisceau de lumière incident, le procédé comprenant les étapes, dans lesquelles :
(a) on forme un premier film (2d) de polysilicium ayant une conductivité de type soit P soit N sur tout un substrat conducteur en silicium (21) ;
(b) on forme, sur ledit premier film (2d) de polysilicium, un motif contenant une partie d'électrode mobile et des parties de support élastique couplées à celle-ci dans une relation espacée et parallèle par un second film (2b) de polysilicium ayant le même type de conductivité que ledit type de conductivité dudit premier film (2d) de polysilicium ;
(c) on attaque la région de surface dudit substrat conducteur en silicium (21) qui fait face à ladite électrode mobile et auxdites parties de support élastique pour former une partie de base inférieure en tant qu'électrode fixe ; et
(d) on forme ledit élément (25) de commutation de trajet optique sur ladite électrode mobile (24).

33. Procédé selon la revendication 32, dans lequel le type de conductivité dudit premier film (2d) de polysilicium est opposé à celui dudit substrat conducteur (21), et l'étape (b) comprend les étapes, dans lesquelles :
(b-1) on forme un film (2a) de SiO₂ sur tout le premier film (2d) de polysilicium et l'on réalise des trous (2ah) dans ledit film de SiO₂ au niveau de positions que l'on destine au couplage de ladite partie de support élastique et dudit substrat conducteur, lesdits trous s'étendant vers le bas jusqu'audit premier film (2d) de polysilicium ;
(b-2) on forme ledit second film (2b) de polysilicium sur tout ledit film de SiO₂ ; et
(b-3) on attaque sélectivement ledit second film (2b) de polysilicium pour former un motif comportant plusieurs trous traversants et contenant ladite partie d'électrode mobile et ladite partie de support élastique.

34. Procédé selon la revendication 33, dans lequel l'étape (c) comprend les étapes, dans lesquelles :
(c-1) on forme un film protecteur (2c) de SiO₂ sur toutes les superficies de la surface et du côté inférieur dudit substrat conducteur en silicium (21) ;
(c-2) on forme des ouvertures qui s'étendent à travers ledit film protecteur (2c) de SiO₂ et vers le bas jusqu'audit premier film (2d) de polysilicium à l'intérieur desdits trous traversants ;
(c-3) on attaque ledit premier film (2d) de polysilicium sur la région de surface dudit substrat conducteur (21) qui est opposée à ladite partie d'électrode mobile et à ladite partie de support élastique, et l'on attaque en outre ladite région de surface dudit substrat conducteur jusqu'à une profondeur prédéterminée pour former ladite partie (21L) de base inférieure ; et
(c-4) on retire ledit film protecteur (2b) de SiO₂.

35. Procédé selon la revendication 32, dans lequel l'étape (b) comprend les étapes, dans lesquelles :
(b-1) on forme un film (2d SiO₂) de SiO₂ sur tout le premier film (2d) de polysilicium ;
(b-2) on forme ledit second film (2b) de polysilicium sur tout ledit film de SiO₂ ; et
(b-3) on attaque sélectivement ledit second film de polysilicium pour former un motif comportant plusieurs trous traversants et contenant ladite partie d'électrode mobile et ladite partie de support élastique.

36. Procédé selon la revendication 35, dans lequel ladite étape (c) comprend les étapes, dans lesquelles :
(c-1) on forme un film protecteur (2c) de SiO₂ sur toutes les superficies de la surface et du côté inférieur dudit substrat conducteur en silicium (21) ;
(c-2) on forme des ouvertures qui s'étendent à travers ledit film protecteur de SiO₂ et vers le bas jusqu'audit premier film (2d) de polysilicium à l'intérieur desdits trous traversants ;
(c-3) on attaque ledit premier film (2d) de polysilicium sur la région de surface dudit substrat conducteur qui est opposée à ladite partie d'électrode mobile et à ladite partie de support élastique, et l'on attaque en outre ladite région de surface dudit substrat conducteur jusqu'à une profondeur prédéterminée pour former ladite partie de base inférieure ; et
(c-4) on retire ledit film protecteur (2c) de SiO₂.

37. Procédé selon la revendication 32, 33, ou 35, dans lequel ledit élément (25) de commutation optique est un micromiroir, et ladite étape (d) comprend les étapes, dans lesquelles :
(d-1) on forme une section métallique d'ensemencement par placage sur ladite partie d'électrode mobile au niveau de la position que l'on destine à la formation dudit micromiroir ;
(d-2) on forme une couche de résist sur toute la superficie dudit substrat en silicium et l'on expose une partie de ladite section métallique d'ensemencement en réalisant un trou ayant la même forme que ledit micromiroir dans ladite couche de résist au niveau de la position que l'on destine à la formation dudit micromiroir ;
(d-3) on remplit, par placage, ledit trou de métal destiné audit micromiroir ; et
(d-4) on retire ladite couche de résist.
